# EUROPÄISCHE PATENTSCHRIFT

(11) **EP 1 357 742 B1**
(45) Veröffentlichungstag und Bekanntmachung des Hinweises auf die Patenterteilung: **20.09.2017**
(21) Anmeldenummer: 03003434.2
(22) Anmeldetag: 14.02.2003
(51) Int. Cl.: H04N 5/232

(54) **Digitale Laufbildkamera**
Digital motion picture camera
Caméra vidéo numérique en cinématographie

(30) Priorität: 24.04.2002 DE 10218313
(43) Veröffentlichungstag der Anmeldung: 29.10.2003
(73) Patentinhaber: ARNOLD & RICHTER CINE TECHNIK GMBH & CO. BETRIEBS KG, 80799 München (DE)
(72) Erfinder: Kandleinsberger, Robert, 80809 München (DE); Khanh, Tran Quoc, Dr., 80636 München (DE); Koppetz, Michael, 81669 München (DE); Popp, Hermann, 81547 München (DE)
(74) Vertreter: Manitz Finsterwald Patentanwälte PartmbB

(56) Entgegenhaltungen:
- EP-A- 0 712 236
- WO-A-00/51345
- WO-A-96/31050
- WO-A-98/51075
- DE-C1- 4 123 203
- US-A- 5 060 074
- PATENT ABSTRACTS OF JAPAN Bd. 014, Nr. 156 (E-0908), 26. März 1990 (1990-03-26) -& JP 02 014675 A (FUJI PHOTO FILM CO LTD), 18. Januar 1990 (1990-01-18)
- STOUGH S A ET AL: "HIGH-PERFORMANCE ELECTRO-OPTIC CAMERA PROTOTYPE" SMPTE JOURNAL, SMPTE INC. SCARSDALE, N.Y, US, Bd. 110, Nr. 3, März 2001 (2001-03), Seiten 140-146, XP001063418 ISSN: 0036-1682
- WEBER K: "FRAME-TRANSFER-CCD-SENSOREN MIT HD-DPM+-TECHNIK IN EINER HD-ANWENDUNG NEUENTWICKLUNGEN BEI MEHRNORMEN-HD-BILDSENSOREN MIT DYNAMISCHEM PIXELMANAGEMENT" FERNSEH UND KINOTECHNIK, VDE VERLAG GMBH. BERLIN, DE, Bd. 55, Nr. 12, Dezember 2001 (2001-12), Seiten 758-761, XP001091884 ISSN: 0015-0142
- FOSSUM E R: "CMOS IMAGE SENSORS: ELECTRONIC CAMERA-ON-A-CHIP" IEEE TRANSACTIONS ON ELECTRON DEVICES, IEEE INC. NEW YORK, US, Bd. 44, Nr. 10, Oktober 1997 (1997-10), Seiten 1689-1698, XP000703881 ISSN: 0018-9383
- JACOBY H D ET AL: "ELECTRONICS IN THE NEW GENERATION OF ARRIFLEX CAMERAS" SMPTE JOURNAL, SMPTE INC. SCARSDALE, N.Y, US, Bd. 100, Nr. 11, 1. November 1991 (1991-11-01), Seiten 880-883, XP000234956 ISSN: 0036-1682
- M. ERKELENZ: "Digitale Kinematographie-mehr als 24p" FERNSEH- UND KINO-TECHNIK, Bd. 56, Nr. 3, 1. März 2002 (2002-03-01), Seiten 127-132, XP002328291 DEUTSCHLAND ISSN: 1430-9947

## Beschreibung

Die Erfindung betrifft eine Laufbildkamera für Bewegtbildaufnahmen mit hoher Bildqualität, wie beispielsweise Fernsehspielfilme, Kinowerbung, Kinofilme oder auch industrielle oder medizinische Anwendungen. Für derartige Aufnahmen sind Laufbildkameras zur Belichtung eines fotochemischen Negativfilms bekannt. Diese Aufnahmetechnik ermöglicht eine hohe Auflösung, eine große Helligkeitsdynamik und eine gute Farbwiedergabe. Allerdings sind das Entwickeln und das Umkopieren eines solchen Negativfilms unerwünscht aufwändig, da spezialisierte Anlagen benötigt werden. Ferner ist es für eine inzwischen übliche elektronische Bildbearbeitung - beispielsweise zur Änderung der Farbe oder zum Einfügen synthetischer Bildelemente - erforderlich, das belichtete Filmmaterial nachträglich zu digitalisieren.

Es sind auch digitale Videokameras bekannt, die die Aufnahmebilder mit drei für verschiedene Farben vorgesehenen CCD-Sensoren aufnehmen und in einem digitalen Format auf Magnetband abspeichern. Die Beobachtung der Aufnahme erfolgt mittels eines elektronischen Suchers in Form eines integrierten Anzeigemonitors, der die mittels der CCD-Sensoren aufgenommenen Aufnahmebilder wiedergibt. Derartige Kameras haben also den Vorteil, dass die aufgenommenen Filmbilder bereits in digitaler Form vorliegen. Solche Videokameras erfüllen jedoch nicht die bei allen typischen Aufnahinesituationen auftretenden Anforderungen hinsichtlich der Handhabung und der Bildqualität, und sie werden demzufolge bei Bewegtbildaufnahmen, bei denen eine besonders hohe Bildqualität erwünscht ist, nicht eingesetzt. Beispielsweise setzt ein derartiger Kameraaufbau mit drei CCD-Sensoren Aufnahmeobjektive mit einer vergleichsweise langen bildseitigen Brennweite voraus, was für die Abbildungsleistungen der Optiken nachteilig ist. Ferner sind Teilerprismen im Empfangsstrahlengang erforderlich, die ebenfalls zu einer unerwünschten Verringerung der Aufnahmequalität führen können.

Aus dem Dokument US 5 060 074 ist eine digitale Laufbildkamera mit den Merkmalen des Oberbegriffs des Anspruchs 1 bekannt. Die Kamera umfasst einen elektronischen Bildstabilisator mit einer Bewegungserkennungsschaltung, wobei in Abhängigkeit von einer detektierten Bewegung der Kamera festgelegt wird, welcher Teil der Empfangssignale am Kameraausgang ausgegeben wird. Somit ist stets ein Teil der Sensorelemente zur Erzeugung von Aufzeichnungsempfangssignalen einem ersten Flächenbereich der Sensoreinrichtung zugeordnet und ein anderer Teil der Sensorelemente zur Erzeugung von Überwachungsempfangssignalen einem zweiten Flächenbereich zugeordnet. Diese Unterteilung der Sensorelemente variiert während der Aufnahme einer Filmszene, falls die Kamera bewegt wird. An der Anzeigeeinrichtung wird die Unterteilung der Sensorelemente in die beiden Flächenbereiche dargestellt, damit der Benutzer den ersten Flächenbereich (Aufzeichnungsempfangssignale) zurück zur Bildmitte führen kann, so dass in der seitlichen Umgebung wieder genügend Raum für die elektronische Filmstabilisierungsfunktion vorhanden ist. Dokument DE 41 23 203 C1 beschreibt eine optoelektronische Sensoreinrichtung, die in einer flächigen Anordnung mehrere Sensorelemente zur Erzeugung eines jeweiligen Empfangssignals in Abhängigkeit von einer Lichtbeaufschlagung aufweist, wobei eine höhere Verteilungsdichte in der Mitte der strahlungsempfindlichen Fläche vorgesehen ist.

Aus dem Dokument M. Erkelenz: "Digitale Kinematographie - mehr als 24p" in: FERNSEH- UND KINO-TECHNIK, 56. Jahrgang, Nr. 3/2002, Seiten 127 bis 132, ist eine digitale Laufbildkamera mit einer variablen Bildaufnahmefrequenz bekannt (Panasonic Camcorder AJ-HDC27).

Das Dokument JP 02-014675 A offenbart eine elektronische Kamera mit zwei optoelektronischen Sensoreinrichtungen, wobei ein teildurchlässiger Spiegel im Empfangsstrahlengang einen Teil des Empfangslichts in Richtung der ersten Sensoreinrichtung durchlässt und einen Teil des Empfangslichts in Richtung der zweiten Sensoreinrichtung umlenkt. Die mittels der ersten Sensoreinrichtung erzeugten Empfangssignale werden von einer Speichereinrichtung gespeichert. Die mittels der zweiten Sensoreinrichtung erzeugten Empfangssignale werden von einer Anzeigeeinrichtung angezeigt. Die zweite Sensoreinrichtung besitzt eine geringere Auflösung als die erste Sensoreinrichtung. Die zweite Sensoreinrichtung erfasst einen größeren Bildbereich als die erste Sensoreinrichtung, so dass die Anzeigeeinrichtung nicht nur den tatsächlich gespeicherten Bildausschnitt, sondern auch einen rahmenförmigen Bildbereich darstellt, der den gespeicherten Bildausschnitt umgibt.

Es ist eine Aufgabe der Erfindung, eine Laufbildkamera zu schaffen, die zum einen eine digitale Aufnahme von Laufbildern ermöglicht und die zum anderen für den Einsatz für Bewegtbildaufnahmen mit hoher Bildqualität, wie beispielsweise Fernsehspielfilme, Kinowerbung oder Kinofilme, geeignet ist.

Diese Aufgabe wird durch eine digitale Laufbildkamera mit den Merkmalen des Anspruchs 1 gelöst.

Bei der erfindungsgemäßen Laufbildkamera ist also eine Sensoreinrichtung mit mehreren fotoelektrischen Sensorelementen vorgesehen, die jeweils ein elektrisches Empfangssignal erzeugen. Diese Empfangssignäle werden, gegebenenfalls nach einer Verstärkung, noch innerhalb der Kamera digitalisiert, so dass die Bildinformationen unmittelbar in einem digitalen Format vorliegen und somit ohne weiteres elektronisch bearbeitet sowie ohne wesentlichen Qualitätsverlust vervielfältigt werden können.

Bei dieser Kamera sind die Sensorelemente der Sensoreinrichtung unterschiedlichen vorbestimmten oder vorbestimmbaren Flächenbereichen zugeordnet. Dabei ist ein Teil der Sensorelemente einem zentralen Flächenbereich zugeordnet, wobei die Empfangssignale dieser Sensorelemente zur langfristigen Bildspeicherung - also zur eigentlichen Aufzeichnung der Aufnahmebilder - herangezogen werden (Aufzeichnungsempfangssignale). Ein anderer oder der restliche Teil der Sensorelemente ist einem den zentralen Flächenbereich umgebenden rahmenförmigen Flächenbereich zugeordnet. Die Empfangssignale dieser Sensorelemente (Überwachungsempfangssignale) können - zusätzlich zu den Aufzeichnungsempfangssignalen - zur Beobachtung und Überwachung der aktuellen Aufnahme herangezogen werden (so genannter "over-scan").

Somit entspricht die erläuterte unterschiedliche Zuordnung einer Unterteilung des aufzunehmenden Laufbilds in einen zur Erzeugung des Laufbildfilms letztlich abzuspeichernden zentralen Bildbereich, und in einen lediglich zur Kontrollbeobachtung vorgesehenen äußeren Bildbereich. Die erfindungsgemäße Laufbildkamera ermöglicht dadurch eine Beobachtung der Aufnahme über den zentralen, für die Erzeugung des Laufbildfilms berücksichtigten Bildbereich hinaus. Hierfür können die entsprechenden Überwachungsempfangssignale gemeinsam mit den Aufzeichnungsempfangssignalen des zentralen Flächenbereichs beispielsweise einem als elektronischer Sucher dienenden Anzeigegerät, insbesondere einem integrierten Anzeigemonitor, zugeführt werden.

Der Kameramann kann somit einen größeren Bildbereich als den tatsächlich abgespeicherten Bildausschnitt sehen. Dadurch wird - ohne die Notwendigkeit eines rein optischen Suchers - die Beobachtung eines äußeren Bildbereichs ermöglicht, um Objekte am Bildrand, die nicht versehentlich aufgezeichnet werden sollen, rechtzeitig erkennen zu können und den aufgezeichneten zentralen Bildausschnitt der Kamera entsprechend frühzeitig von solchen Objekten wegführen zu können. Auf diese Weise kann beispielsweise eine unbeabsichtigte Aufzeichnung eines Mikrofons am Rand des Bildausschnitts rechtzeitig erkannt und verhindert werden.

Somit besteht ein Vorteil der erläuterten Unterteilung der Sensorelemente also darin, dass eine Kontrollbeobachtung eines äußeren, letztlich nicht aufzuzeichnenden Bildausschnitts möglich ist, ohne dass zu diesem Zweck ein optischer Sucher oder ein Kontroll-Fotosensor zusätzlich zu der ohnehin erforderlichen Sensoreinrichtung benötigt werden.

Das genannte Anzeigegerät ist vorzugsweise in die Laufbildkamera integriert, um dem die Kamera führenden Kameramann stets eine direkte Beobachtung der aufgezeichneten Laufbilder sowie der letztlich nicht abgespeicherten Bildumgebung zu ermöglichen.

Alternativ oder zusätzlich kann ein Anzeigegerät vorgesehen sein, das nicht unmittelbar an der Laufbildkamera angeordnet, mit dieser jedoch zur Übertragung der Überwachungsempfangssignale und der Aufzeichnungsempfangssignale verbunden ist. Dadurch ist eine Aufnahmebeobachtung auch an einem von der Laufbildkamera entfernten Ort möglich, beispielsweise falls die Kamera an einem Kran montiert ist. In einem derartigen Fall kann eine Kopplung des Anzeigegeräts mit der Kamera beispielsweise über Kabel oder über eine Funkverbindung erfolgen.

Gemäß einer vorteilhaften Ausführungsform ist die genannte Anzeigeeinrichtung mit einem Bildgenerator gekoppelt, durch den ein Trennrahmensignal erzeugt und an die Anzeigeeinrichtung übermittelt werden kann, das an der Anzeigeeinrichtung als Trennrahmen zur Unterscheidung des zentralen, letztlich gespeicherten Bildbereichs und des rahmenförmigen, lediglich für Kontrollzwecke vorgesehenen Bildbereichs erscheint. Der Bildgenerator kann zusätzlich dazu verwendet werden, bestimmte Aufnahmeparameter, beispielsweise die aktuelle Blendeneinstellung des Aufnahmeobjektivs, an der Anzeigeeinrichtung darzustellen. Alternativ zu der Verwendung eines Bildgenerators kann an der Anzeigeeinrichtung auch eine dauerhafte physische Markierung der Grenze zwischen dem zentralen und dem rahmenförmigen Bildbereich vorgesehen sein.

Vorzugsweise können die Sensorelemente von der Steuereinrichtung derart angesteuert werden, dass die Aufzeichnungsempfangssignale und die Überwachungsempfangssignale wahlweise getrennt ausgelesen werden können.

Den Sensorelementen des zentralen Flächenbereichs und den Sensorelementen des umgebenden rahmenförmigen Flächenbereichs können unterschiedliche Schnittstellen zugeordnet sein, um entweder eine Übertragung der Empfangssignale sowohl an eine Speichereinrichtung als auch an eine Anzeigeeinrichtung, oder eine Übertragung der Überwachungsempfangssignale lediglich an die Anzeigeeinrichtung zu ermöglichen. Insbesondere können dem zentralen Flächenbereich eine Schnittstelle zur Übertragung der Aufzeichnungsempfangssignale an eine Speichereinrichtung und eine Schnittstelle zur Übertragung der Aufzeichnungsempfangssignale an eine Anzeigeeinrichtung zugeordnet sein, wobei diese beiden Schnittstellen auch durch eine einzige gemeinsame Schnittstelle, gebildet sein können, falls eine entsprechende Aufteilung der Aufzeichnungsempfangssignale an einer nachgeschalteten Stelle der Signalverarbeitung erfolgen soll.

Vorzugsweise ist eine Verschaltung der Sensorelemente mit einer Speichereinrichtung und mit einer Anzeigeeinrichtung derart vorgesehen, dass während eines Auslesedurchgangs die Empfangssignale aller Sensorelemente ausgelesen werden, wobei die Aufzeichnungsempfangssignale an die Speichereinrichtung und die Anzeigeeinrichtung übermittelt und die Überwachungsempfangssignale lediglich an die Anzeigeeinrichtung übermittelt werden.

Die Übermittlung der Überwachungsempfangssignale an die Anzeigeeinrichtung kann seriell, parallel oder lediglich gruppenweise parallel erfolgen, vorzugsweise in Übereinstimmung mit der Art des Übermittelns der Aufzeichnungsempfangssignale an die Speichereinrichtung.

Die Aufzeichnungsempfangssignale werden in digitalisierter Form an die Speichereinrichtung übermittelt. Die Übermittlung der Überwachungsempfangssignale an die Anzeigeeinrichtung kann in analoger Form erfolgen, wobei die Anzeigeeinrichtung mit den Sensorelementen des zentralen Flächenbereichs an einer Stelle noch vor der Digitalisierungseinrichtung verbunden ist und somit für die Sensorelemente des rahmenförmigen Flächenbereichs eine Digitalisierungseinrichtung überhaupt nicht erforderlich ist. Die Übermittlung der Empfangssignale an die Anzeigeeinrichtung kann alternativ in digitaler Form erfolgen, so dass die Anzeigeeinrichtung - beispielsweise gemeinsam mit einer Speichereinrichtung - mit dem Ausgang einer Digitalisierungseinrichtung verbunden ist. Auf diese Weise kann anhand der Anzeigeeinrichtung zusätzlich überprüft werden, ob die Digitalisierung der Empfangssignale in zufrieden stellender Weise erfolgt ist.

In einer möglichen Ausführungsform ist die Verschaltung der Sensorelemente derart gewählt, dass die Unterteilung in den zentralen und den rahmenförmigen Flächenbereich dauerhaft festgelegt ist. Die Erfindung kann jedoch auch besonders gut durch Verwendung einer Sensoreinrichtung verwirklicht werden, deren Sensorelemente mittels der Steuereinrichtung wahlfrei angesteuert werden können, so dass die Empfangssignale in beliebiger Reihenfolge oder zu beliebigen Zeitpunkten erzeugt und ausgelesen werden können. Dadurch ist es beispielsweise möglich, besondere Bildausschnitte aufzunehmen oder zu Kontrollzwecken bezüglich bestimmter Sensorelemente mehrere Empfangssignale - beispielsweise für unterschiedliche Belichtungszeiten - zu ermitteln. Außerdem ist es möglich, die Zuordnung der Sensorelemente zu dem zentralen bzw. dem rahmenförmigen Flächenbereich zu variieren, um die Größe und/oder die Form der Flächenbereiche ändern zu können. Ein wahlfreies Auslesen der Sensorelemente ist insbesondere bei der Verwendung eines CMOS-Sensors möglich.

Gemäß einer vorteilhaften Weiterbildung der Erfindung sind die Sensorelemente des äußeren rahmenförmigen Flächenbereichs in einer geringeren Helligkeits-, farblichen oder zeitlichen Auflösung vorgesehen als die Sensorelemente des zentralen Flächenbereichs der Sensoreinrichtung. Die Sensorelemente des rahmenförmigen Flächenbereichs dienen nämlich, wie erläutert, lediglich zur Kontrollbeobachtung, nicht jedoch zur tatsächlichen Aufzeichnung des Laufbilds. Eine verringerte Auflösung im äußeren Bildbereich macht sich deshalb in dem abgespeicherten Laufbild nicht bemerkbar und kann auch für die Kontrollbeobachtung unerheblich sein, insbesondere falls die Auflösung der Sensorelemente des rahmenförmigen Flächenbereichs nicht schlechter ist als die - in der Praxis stets begrenzte - Auflösung des verwendeten Anzeigegeräts.

Außerdem ist die verwendete Aufnahmeoptik üblicherweise ohnehin lediglich auf die Größe des letztlich aufgezeichneten bzw. abgespeicherten Laufbildes, also auf die Größe des zentralen Flächenbereichs der Sensoreinrichtung optimiert. Dennoch bildet die Aufnahmeoptik sehr wohl auch noch Bereiche außerhalb des zentralen Bildbereiches ab, jedoch lediglich mit verminderten Abbildungseigenschaften. Somit führt die Ausgestaltung der Sensorelemente des äußeren rahmenförmigen Flächenbereichs mit verminderter Auflösung nicht unbedingt zu weitergehenden Einschränkungen hinsichtlich der Kontrollbeobachtung der Aufnahme, als diese durch den Außenbereich der Aufnahmeoptik ohnehin vorgegeben sind. Daher ist es besonders ökonomisch, wenn die Ausdehnung des zentralen Flächenbereichs der Sensoreinrichtung genau einem Zentralbereich innerhalb der Bildebene entspricht, für den die Abbildungseigenschaften der Aufnahmeoptik der Laufbildkamera optimiert sind.

Demgegenüber kann eine derartig verringerte Auflösung im äußeren Bildbereich dazu beitragen, eine kostengünstigere Herstellung der Sensoreinrichtung, der zugeordneten Datenschnittstellen und/oder der zugeordneten Ausleseelektronik zu ermöglichen und den vergleichsweise hohen Datenfluss der auszulesenden Empfangssignale der Sensoreinrichtung zu reduzieren.

Insbesondere kann innerhalb des rahmenförmigen Flächenbereichs der Sensoreinrichtung eine geringere Empfindlichkeit oder Helligkeitsauflösung als in dem zentralen Flächenbereich vorgesehen sein.

Auch in farblicher Hinsicht kann die Auflösung des rahmenförmigen Flächenbereichs geringer sein als in dem zentralen Flächenbereich. Für den erläuterten Zweck der Kontrollbeobachtung auf eventuell störende Objekte am Bildrand ist die Farbwiedergabe nämlich von untergeordneter Bedeutung. Im Extremfall kann es ausreichen, wenn die Sensorelemente des rahmenförmigen Flächenbereichs lediglich für eine monochromatische Aufnahme ausgebildet sind.

Alternativ oder zusätzlich kann die Sensoreinrichtung innerhalb des rahmenförmigen Flächenbereichs eine verringerte zeitliche Auflösung besitzen. In diesem Fall ist also die maximale Frequenz, mit der die Sensorelemente des rahmenförmigen Flächenbereichs ausgelesen werden können und demzufolge ein vollständiger äußerer Bildrahmen aufgenommen werden kann, geringer als in dem zentralen Flächenbereich. Auch diese Einschränkung ist für den erläuterten Zweck der Kontrollbeobachtung auf eventuell störende Objekte am Bildrand von untergeordneter Bedeutung. Dies gilt insbesondere für den Fall einer Zeitlupenaufnahme, bei der das tatsächlich abzuspeichernde Laufbild innerhalb des zentralen Flächenbereichs mit einer erhöhten Bildaufnahmefrequenz, beispielsweise mit 100 Bildern pro Sekunde, aufgenommen wird. Für die reine Kontrollbeobachtung einer derartigen Zeitlupenaufnahme genügt hingegen eine übliche Bildaufnahmefrequenz, beispielsweise von 24 Bildern pro Sekunde.

Die vorgenannten unterschiedlichen Arten verringerter Auflösung können beliebig kombiniert werden, um eine kostengünstige Herstellung der Sensoreinrichtung einerseits und eine hinreichende Kontrollwiedergabe des Aufnahmebilds andererseits zu erreichen.

Die erfindungsgemäße Laufbildkamera besitzt lediglich einen einzigen optoelektronischen Sensor, insbesondere den bereits genannten CMOS-Sensor. Bei einer Verwendung eines einzigen Sensors für alle Farben kann auf die bei Verwendung mehrerer Sensoren erforderlichen vorgeschalteten Strahlenteiler verzichtet werden. Dadurch wird eine Verbesserung der Bildqualität erreicht. Weiterhin bewirkt der Wegfall der Strahlenteiler, dass der Abstand eines derartigen einzigen Sensors zu der Aufnahmeoptik verringert werden kann, so dass hochwertigere Optiken verwendet werden können.

Um bei einer derartigen Ausführungsform mit einem einzigen Sensor eine Farbunterscheidung zu ermöglichen, kann jedes Sensorelement mit einem Farbfilter, insbesondere einem Rot-, Grün- oder Blaufilter versehen sein. Jedes Sensorelement empfängt somit ein einem Bildpunkt zugeordnetes Signal, das jedoch nur der Bildinformation einer einzelnen Farbe entspricht. Die weiteren Farbinformationen für diesen Bildpunkt werden aus den Empfangssignalen der benachbarten, mit anderen Farbfiltern versehenen Sensorelemente errechnet. Alternativ kann die Farbe von einem dem Sensorelement zugeordneten Filter in schneller zeitlicher Folge geändert werden, um so alle Farbinformationen zu erhalten.

Es ist jedoch auch möglich, eine farbsensitive Sensoreinrichtung zu verwenden, beispielsweise einen Halbleitersensor, der in verschiedenen Tiefen eine unterschiedliche spektrale Absorption besitzt. Dadurch kann jedes einem Bildpunkt entsprechende Sensorelement mehrere Empfangssignale erzeugen, die unterschiedlichen Wellenlängenbereichen oder Farben entsprechen. Beispielsweise kann ein derartiges farbauflösendes Sensorelement ein Rot-, Grün- und Blau-Empfangssignal erzeugen.

Alternativ hierzu können zur Realisierung unterschiedlicher spektraler Empfindlichkeiten auch zwei oder drei Sensoren vorgesehen sein.

Gemäß einer vorteilhaften Weiterbildung der Erfindung kann die Frequenz, mit der die aufeinander folgenden Laufbilder aufgenommen werden, variiert werden, und zwar in einer vom Anwender vorgebbaren Weise. Dadurch können die Bilder mit einer anderen Frequenz aufgenommen werden, als sie letztlich als Laufbildfilm wiedergegeben werden sollen. Diese Veränderlichkeit der Bildaufnahmefrequenz ermöglicht Zeitrafferaufnahmen, die beispielsweise für Action-Szenen oder bei extrem langsam ablaufenden Vorgängen erwünscht sind, um einen Handlungsvorgang schneller erscheinen zu lassen als er während der Aufnahme tatsächlich abläuft. Ferner gestattet die Veränderlichkeit der Bildaufnahmefrequenz Zeitlupenaufnahmen, wie sie für viele Bewegtbildaufnahmen ebenfalls gängig und erwünscht sind.

Wichtig für diese Weiterbildung ist, dass diese Vorteile durch Änderung der Frequenz, mit der die aufeinander folgenden Laufbilder aufgenommen werden, erreicht werden, und dass die erwünschten Zeitraffer- oder Zeitlupeneffekte demnach nicht durch nachträgliche zeitliche Interpolation einzelner Laufbilder erzeugt werden. Dadurch werden Interpolationsartefakte vermieden, die bei Interpolation von Laufbildern auftreten können, die mit einer konstanten Frequenz aufgenommen worden sind, wie dies beispielsweise bei den eingangs genannten CCD-Sensoren der Fall ist. Dagegen ist es für die Verwirklichung der erläuterten Weiterbildung unerheblich, ob die Laufbilder als Vollbilder oder als Halbbilder aufgenommen werden.

Bei dieser Weiterbildung ist also die Möglichkeit einer Abweichung der aktuellen Bildaufnahmefrequenz von einem Grundwert von beispielsweise 24 Bildern pro Sekunde (frames per second, fps) vorgesehen. Dies bedeutet, dass die einzelnen aufgenommenen Laufbilder eine zunehmende Phasenverschiebung bezüglich dieses Grundwerts der Bildaufnahmefrequenz besitzen.

Die genannte Variierung der Bildaufnahmefrequenz kann beispielsweise dadurch verwirklicht werden, dass der Anfangszeitpunkt der Belichtung der Sensorelemente, also der Anfangszeitpunkt der Lichtbeaufschlagung oder der Zeitpunkt des tatsächlichen Beginns der Empfangssignalerzeugung aufgrund einer Lichtbeaufschlagung, durch entsprechende Ansteuerung zu unterschiedlichen Zeitpunkten oder Phasenlagen erfolgt. Insbesondere kann das Rücksetzen oder Löschen eines fotoelektrischen Sensorelements zu einem durch die Steuereinrichtung vorgebbaren Zeitpunkt erfolgen.

Alternativ oder zusätzlich kann die Bildaufnahmefrequenz dadurch variiert werden, dass die Steuereinrichtung das Ende der Belichtung eines fotoelektrischen Sensorelements zu unterschiedlichen Zeitpunkten veranlasst. Diese Maßnahme führt insbesondere dann zu unterschiedlichen Bildaufnahmefrequenzen, wenn der Beginn der Belichtung eines nachfolgenden Laufbilds nicht gemäß einem festen Zeitraster erfolgt, sondern in zeitlichem Bezug lediglich zu dem (variierbaren) Endzeitpunkt der vorherigen Belichtung.

In beiden Fällen oder durch Kombination dieser beiden Steuerungsmaßnahmen wird also eine Phasenverschiebung der Bildaufnahme bezüglich eines Grundwerts der Bildaufnahmefrequenz erreicht, wobei gleichzeitig eine Variierung der Dauer der Belichtungszeit möglich ist.

Die erwünschte Variierung der Bildaufnahmefrequenz kann auch dadurch verwirklicht werden, dass die Rate oder Frequenz variiert wird, mit der die Empfangssignale der einzelnen Sensorelemente nacheinander rückgesetzt oder ausgelesen werden. Mit anderen Worten kann ein sequentielles Auslesen der Empfangssignale der Sensorelemente gemäß einem Auslesetakt vorgesehen sein, wobei durch das sequentielle Auslesen aller Empfangssignale letztlich ein einziges Bild aufgenommen wird. Durch Variierung dieses Auslesetakts kann von einem festen Zeitraster und somit von einem bestimmten Grundwert der Bildaufnahmefrequenz abgewichen werden.

Was die Reihenfolge des Auslesens der fotoelektrischen Sensorelemente betrifft, ist es möglich, dass die Steuereinrichtung zunächst nacheinander ein Rücksetzen oder Löschen aller Sensorelemente veranlasst und anschließend die Empfangssignale der Sensorelemente nacheinander ausliest, also an eine Verstärkungseinrichtung und/oder an die Digitalisierungseinrichtung weiterleitet. In einem derartigen Fall ist die vorerwähnte Variierung des Anfangszeitpunkts und/oder des Endzeitpunkts der Belichtung besonders geeignet, um die erwünschte Variierung der Bildaufnahmefrequenz zu verwirklichen.

Alternativ zu diesem sequentiellen Auslesen der Sensorelemente kann auch vorgesehen sein, die Empfangssignale der fotoelektrischen Sensorelemente parallel oder zumindest gruppenweise parallel - beispielsweise unterteilt nach den erläuterten unterschiedlichen Flächenbereichen der Sensoreinrichtung - auszulesen. Dies vereinfacht die Verwirklichung besonders hoher Bildaufnahmefrequenzen. Die Bildaufnahmefrequenz kann hierbei variiert werden, indem die Sensorelemente bzw. eine Gruppe von Sensorelementen gemeinsam zu variablen Zeitpunkten rückgesetzt und/oder zu variablen Zeitpunkten ausgelesen werden.

Vorzugsweise sind die Sensoreinrichtung und die Steuereinrichtung für eine stufenlose Variierbarkeit der Bildaufnahmefrequenz ausgebildet, beispielsweise durch stufenlose Variierbarkeit des Auslesetakts der Sensorelemente. Alternativ hierzu kann eine Veränderlichkeit der Bildaufnahmefrequenz in vorbestimmten Frequenzschritten vorgesehen sein, beispielsweise indem die Bildaufnahmefrequenz in Einheiten des Auslesetakts geändert wird, mit dem die fotoelektrischen Sensorelemente sequentiell ausgelesen werden. Zum Beispiel kann nach einem sequentiellen oder simultanen Auslesen aller Sensorelemente für die Dauer eines vorgebbaren, stufenlos oder diskret variablen Warteeintervalls abgewartet werden, bis erneut mit dem sequentiellen Auslesen oder gegebenenfalls dem hierzu erforderlichen Rücksetzen der Sensorelemente begonnen wird.

Jedem Sensorelement der Sensoreinrichtung kann, wie bereits erwähnt, eine eigene Verstärkungseinrichtung zur Verstärkung des jeweiligen Empfangssignals und/oder eine eigene Digitalisierungseinrichtung zugeordnet sein. In diesem Fall ist es bevorzugt, wenn die Verstärkungseinrichtung oder die Digitalisierungseinrichtung bereits in die Sensoreinrichtung bzw. den entsprechenden Halbleiterbaustein integriert ist. Beispielsweise können in einem dreidimensionalen Aufbau der Sensoreinrichtung an der Rückseite einer die Sensorelemente enthaltenden fotoelektrischen Fläche Verstärker und/oder Analog/Digital-Wandler integriert sein.

Alternativ hierzu ist es auch möglich, für mehrere oder alle Sensorelemente gemeinsam eine einzige Verstärkungseinrichtung oder zumindest eine einzige Digitalisierungseinrichtung vorzusehen.

Eine besonders einfache Verwirklichung der Erfindung ist durch Ausbildung der Sensoreinrichtung in CMOS-Bauweise oder einer verwandten Technologie möglich. Ein derartiger Sensor ermöglicht die erläuterte flexible Variierung der Bildaufnahmefrequenz, und er gestattet ein Auslesen der Sensorelemente mit einem vergleichsweise hohen Auslesetakt und somit mit einer hohen Bildaufnahmefrequenz. Dadurch kann die Bildaufnahmefrequenz letztlich innerhalb eines vorteilhaft großen Frequenzbereichs variiert werden.

Bei der erfindungsgemäßen Laufbildkamera kann, wie bereits erwähnt, eine rein elektronische Steuerung der Bildaufnahmefrequenz oder der Belichtungszeit der Sensoreinrichtung vorgesehen sein. Dabei kann die Belichtungszeit der einzelnen Sensorelemente, also der Anfangszeitpunkt und/oder der Endzeitpunkt der Empfangssignalbildung, mittels der Steuereinrichtung für alle oder für einen Teil der Sensorelemente gemeinsam, oder für jedes Sensorelement individuell gesteuert werden. Im erstgenannten Fall ist gewährleistet, dass für alle Sensorelemente dieselbe Belichtungszeit vorgesehen ist, so dass die Helligkeits- und Farbwerte des aufgenommenen Laufbildes originalgetreu aufgenommen werden. Eine gemeinsame Ansteuerung lediglich eines Teils der Sensorelemente oder eine individuelle Ansteuerung aller Sensorelemente unabhängig voneinander ermöglicht dagegen die Erzeugung von Empfangssignalen aufgrund unterschiedlicher Belichtungszeiten bezüglich verschiedener Sensorelemente, so dass beispielsweise bereits als vergleichsweise kontrastarm identifizierte Bildbereiche mit einer angepassten Belichtungszeit aufgenommen werden können, um für derartige Bildbereiche dennoch eine ausreichend große Datentiefe zu erzielen.

Alternativ oder zusätzlich zu der rein elektronischen Steuerung der Belichtungszeit kann der Sensoreinrichtung eine Blendeneinrichtung vorgeschaltet sein, die eine Einstellung oder Begrenzung der Belichtungszeit der Sensoreinrichtung ermöglicht. Eine derartige Blendeneinrichtung kann beispielsweise drehbewegliche Rotationsblende aufweisen, die eine oder mehrere Abdunklungsbereiche sowie eine oder mehrere Durchlass-öffnungen besitzt, die insbesondere kreissektorförmig sind. Durch Drehantrieb einer derartigen Rotationsblende wird die Sensoreinrichtung abwechselnd mit Empfangslicht beaufschlagt bzw. abgedunkelt.

Im Rahmen einer anderen vorteilhaften Weiterbildung der Erfindung ist es möglich, die Sensorelemente mittels der Steuereinrichtung derart anzusteuern, dass aufeinander folgend mehrere Empfangssignale erzeugt werden, die unterschiedlichen Belichtungszeiten entsprechen und dabei einem einzigen aufzunehmenden Laufbild zugeordnet sind. Insbesondere kann nach Beginn der Belichtung eines Empfahgselements, also nach dem erforderlichen Rücksetzen oder Löschen dieses Empfangselements, das zwischenzeitlich jeweils akkumulierte Empfangssignal zu mehreren aufeinander folgenden Zeitpunkten abgegriffen werden, ohne dass zwischenzeitlich ein neuerliches Rücksetzen bzw. Löschen von akkumulierter Ladung erfolgt.

Durch eine derartige Ansteuerung werden für dasselbe Sensorelement und für dasselbe Laufbild also mehrere Empfangssignale zu definierten Zeitpunkten erzeugt. Falls für die eigentlich erwünschte Belichtungszeit das Empfangssignal sich in einem Sättigungsbereich der Sensoreinrichtung befindet, kann aufgrund der weiteren, einer kürzeren Belichtungszeit entsprechenden Empfangssignale der korrekte Empfangssignalwert noch nachträglich rechnerisch durch Extrapolation ermittelt werden. Ebenso ist es möglich, zur Vermeidung einer Unterbelichtung - also zur Vermeidung eines nicht nutzbaren Empfangssignals - die Sensoreinrichtung vorsorglich länger zu belichten, und den korrekten Signalwert für solche Sensorelemente, für die die längere Belichtung zu einer Überbelichtung führt, durch zusätzliches Auslesen von Empfangssignalen zu kürzeren Belichtungszeiten rechnerisch zu ermitteln.

Ein CMOS-Sensor ist für diese Art der Ansteuerung besonders geeignet, da die Empfangssignale der einzelnen Sensorelemente zerstörungsfrei, also signalerhaltend ausgelesen werden können, beispielsweise in Form von aktuellen Spannungswerten. Außerdem erweist es sich bei einem CMOS-Sensor als Vorteil, dass dieser vergleichsweise hohe Ausleseraten ermöglicht. Dadurch ist mit der erläuterten mehrmaligen Signalgewinnung kein signifikanter Zeitverlust verbunden, da letztlich lediglich für jedes Sensorelement vorsorglich eine vergleichsweise lange Belichtungszeit angesetzt wird, für die allerdings mehrere Auslesevorgänge erfolgen. Ferner kann eine Kühleinrichtung zur aktiven Kühlung der Sensoreinrichtung vorgesehen sein, die beispielsweise ein Peltier-Element oder einen Lüfter aufweist.

In einer bevorzugten Ausführungsform weist die erfindungsgemäße Laufbildkamera wenigstens eine digitale Speichereinrichtung zum Speichern der aufgenommenen und digitalisierten Aufzeichnungsempfangssignale auf. Eine derartige Speichereinrichtung ist bevorzugt in einer austauschbaren Weise an die Kamera ankoppelbar, um ein schnelles Auswechseln zu ermöglichen. Die genannte Digitalisierungseinrichtung ist mit der Speichereinrichtung über wenigstens eine Datenschnittstelle zur Weiterleitung der jeweils digitalisierten Aufzeichnungsempfangssignale verbunden, wobei vorzugsweise eine der Anzahl der Digitalisierungseinrichtungen entsprechende Anzahl von Datenschnittstellen vorgesehen ist.

Das Speichern der Aufzeichnungsempfangssignale in der Speichereinrichtung erfolgt bevorzugt mit einer großen Bandbreite, also ohne Reduktion der bei der Bildaufnahme akquirierten Daten. Mit anderen Worten wird ein großer Speicherplatzbedarf in Kauf genommen, um keinen irreversiblen Verlust von Laufbilddaten durch Datenkomprimierung oder durch Bildaufbereitung wie beispielsweise Farb- oder Helligkeitsmodifikation zu riskieren. Eine mögliche Datenkomprimierung oder Bildaufbereitung soll erst anhand einer Kopie der aufgenommenen, in der Speichereinrichtung abgelegten Originaldaten erfolgen.

Gemäß einer bevorzugten Ausführungsform kann die Speichereinrichtung mittels der Steuereinrichtung zu einem zusätzlichen Speichern wenigstens eines Aufnahmeparameters gesteuert werden, um mit den Laufbilddaten beispielsweise die aktuelle Bildaufnahmefrequenz, die aktuelle Blendeneinstellung des Aufnahmeobjektivs oder eine Textinformation über die aufgenommene Filmszene (Take) abzuspeichern. Derartige Aufnahmeparameter können zu Dokumentationszwecken oder für eine entsprechende Einstellung der Kamera für eine spätere Wiederaufnahme der Dreharbeiten herangezogen werden.

Ferner kann die erfindungsgemäße Laufbildkamera mit einer Uhr ausgestattet sein, die eine Uhrzeit bereitstellt, die gemeinsam mit Laufbilddaten oder mit Aufnahmeparametern gespeichert werden kann, um eine Zuordnung dieser Daten zu definierten Zeitpunkten zu ermöglichen.

Weiterhin kann seitens der Speichereinrichtung eine Identifizierungseinrichtung vorgesehen sein, die die Übermittlung eines dieser Speichereinrichtung entsprechenden Identifizierungscodes an die Laufbildkamera ermöglicht. Dadurch kann die Steuereinrichtung der Kamera beispielsweise ein Auswechseln der Speichereinrichtung, das Gesamtfassungsvermögen oder das noch verbleibende Fassungsvermögen der Speichereinrichtung erkennen. Eine weitere Anwendungsmöglichkeit einer solchen Identifizierungseinrichtung besteht darin, dass zuvor an die Speichereinrichtung übermittelte Aufnahmeparameter wieder zurück in die Kamera geladen werden können, um beispielsweise eine automatische Einstellung der Kamera entsprechend einer früheren Einstellung zu ermöglichen. Die genannte Identifizierungseinrichtung kann beispielsweise einen Mikrocontroller und einen nichtflüchtigen Speicher aufweisen.

Eine Schwierigkeit bei der Gewinnung der Empfangssignale mit einer hohen Datentiefe und einer dementsprechend hohen Datenrate besteht darin, dass die Speichereinrichtung eine für die üblichen Aufnahmedauern ausreichende Kapazität besitzen muss. Die Speichereinrichtung muss deshalb entweder mit einem vergleichsweise großen Fassungsvermögen ausgestattet sein, oder es muss ein Wechsel der Speichereinrichtung während der laufenden Aufnahme möglich sein.

Bei einer weiteren vorteilhaften Ausführungsform ist deshalb keine physische Kopplung zwischen der Kamera und der Speichereinrichtung vorgesehen, sondern die abzuspeichernden Laufbilddaten oder Aufnahmeparameter werden drahtlos an die Speichereinrichtung ermittelt. Zu diesem Zweck kann die Laufbildkamera einen Funksender und die Speichereinrichtung einen entsprechenden Funkempfänger besitzen. Diese Ausführungsform hat den Vorteil, dass die Baugröße der Speichereinrichtung oder mehrerer zu verwendender Speichereinrichtungen nicht die Handhabung der Kamera einschränkt. Auch das Gewicht der Kamera kann auf diese Weise deutlich reduziert werden.

Außerdem kann eine derartige drahtlose Ankopplung von Speichereinrichtungen an die Laufbildkamera einen unterbrechungsfreien Wechsel der Speichereinrichtung vereinfachen, um nicht aufgrund des erschöpften Fassungsvermögens einer einzigen Speichereinrichtung eine Filmaufnahme vorzeitig beenden zu müssen oder Bilddaten zu verlieren. Ein derartiger unterbrechungsfreier Wechsel der Datenübertragung an mehrere Speichereinrichtungen nacheinander kann beispielsweise nach dem Prinzip des "Roaming" erfolgen, wie es beispielsweise in Zusammenhang mit dem Wechsel einer Sende-/Empfangsstation bei Mobilfunktelefonen bekannt ist.

Alternativ oder zusätzlich ist es bevorzugt, wenn eine Zwischenspeichereinrichtung vorgesehen ist, die als Datenpuffer dient, um die letztlich in einer Speichereinrichtung abzuspeichernden Daten vorläufig aufzunehmen und an diese Speichereinrichtung weiterzugeben. Eine solche Zwischenspeichereinrichtung ist - zugunsten einer erhöhten Datensicherheit - insbesondere bei einem Auswechseln von Speichereinrichtungen während einer laufenden Filmaufnahme von Vorteil. Beispielsweise kann im Falle der erläuterten Funkübertragung von abzuspeichernden Daten an unterschiedliche Speichereinrichtungen eine derartige Zwischenspeichereinrichtung seitens der Laufbildkamera oder seitens einer entfernt von der Kamera angeordneten Speichereinrichtung vorgesehen sein.

Zu der erläuterten Speichereinrichtung ist noch anzumerken, dass diese wenigstens eine Ausgangsschnittstelle zur Ausgabe der gespeicherten Daten besitzen kann. Auch diese Ausgangsschnittstelle kann beispielsweise als Funksender ausgebildet sein, um eine drahtlose Weiterleitung der Daten zu ermöglichen.

Die Speichereinrichtung kann in einer vorteilhaften Ausführungsform zur Ausgabe der gespeicherten Daten mit einer Ausgaberate gesteuert werden, die von der Rate des Einlesens der abzuspeichernden Daten verschieden ist, beispielsweise um eine nachträgliche Sicherung der Daten innerhalb eines - vergleichsweise langsamen - Magnetbandspeichers zu ermöglichen.

Die Speichereinrichtung kann insbesondere einen magnetischen Speicher (beispielsweise eine Festplatte), einen optischen Speicher (beispielsweise eine beschreibbare CD oder DVD oder einen holographischen Speicher), einen magnetooptischen Speicher, einen Halbleiterspeicher (beispielsweise einen RAM-Speicher oder ein Flash-Memory), oder mehrere oder eine Kombination dieser Speichermedien aufweisen.

Schließlich ist es bevorzugt, wenn die Laufbildkamera einen modularen Aufbau besitzt, um ein einfaches und rasches Auswechseln von elektronischen, optischen und mechanischen Modulen zu ermöglichen, und um ferner die Verwendung herkömmlicher Kamerakomponenten zu gestatten. Insbesondere kann die Sensoreinrichtung gemeinsam mit der Steuereinrichtung, ferner eine Aufnahmeoptik, oder eine Speichereinrichtung jeweils eine eigene derartige Moduleinheit bilden.

Weitere bevorzugte Ausführungsformen der Erfindung sind in den Unteransprüchen genannt. Die Erfindung wird nachfolgend beispielhaft unter Bezugnahme auf die Zeichnungen erläutert; in diesen zeigen:
- Fig. 1 und 2: mögliche Ausführungsformen einer erfindungsgemäßen Laufbildkamera,
- Fig. 3 und 4: mögliche Ausführungsformen einer Sensoreinrichtung, und
- Fig. 5 und 6: Zeitdiagramme zur Illustrierung verschiedener Steuerabfolgen mit unterschiedlichen Bildaufnahmedauern.

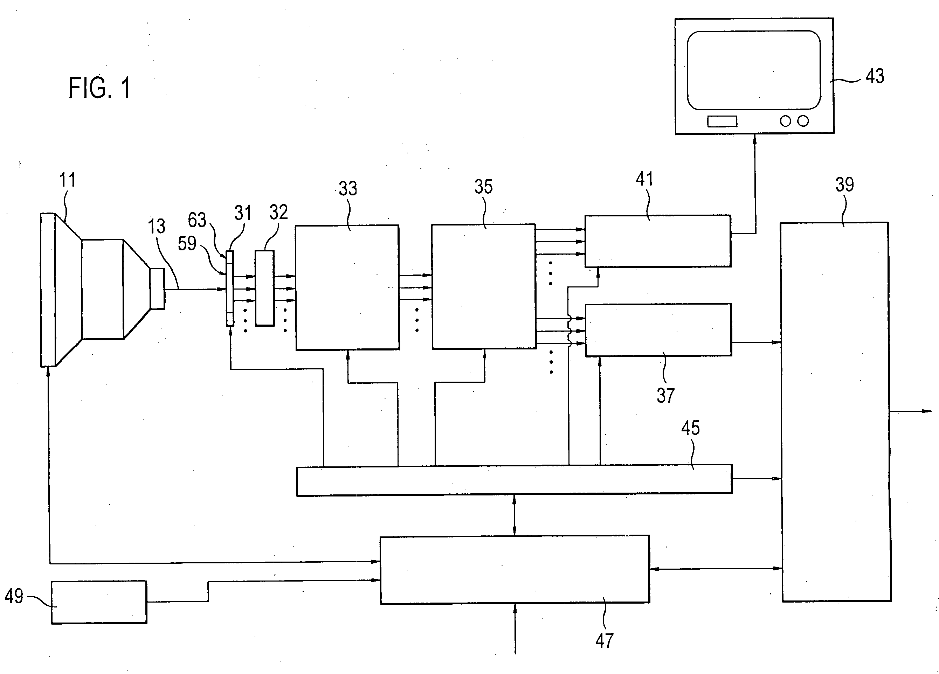

Fig. 1 zeigt einen möglichen Aufbau der erfindungsgemäßen Laufbildkamera. Diese besitzt eine Aufnahmeoptik 11, die das aktuell aufzuzeichnende Laufbild entlang eines Empfangsstrahlengangs 13 auf eine optoelektronische Sensoreinrichtung 31 abbildet. Die Sensoreinrichtung 31 besitzt in einer matrixförmigen Anordnung mehrere Sensorelemente, die infolge der Lichtbeaufschlagung ein jeweiliges Empfangssignal erzeugen können, das der Lichtintensität und der Belichtungszeit entspricht. Beispielsweise kann die Sensoreinrichtung 31 innerhalb eines zentralen Flächenbereichs eine Anordnung von 1920 x 1080 oder 2880 x 2160 derartigen Sensorelementen aufweisen.

Die von der Sensoreinrichtung 31 erzeugten Empfangssignale werden parallel oder teilweise parallel einer Verstärkungseinrichtung 32 zugeführt, die eine entsprechende Anzahl von elektronischen Verstärkern aufweist. Die derartig verstärkten Empfangssignale werden in einer nachgeschalteten Digitalisierungseinrichtung 33 durch eine entsprechende Anzahl von Analog/Digital-Wandlern digitalisiert. Die Digitalisierungseinrichtung 33 ist über einen Datenbus 35 und eine Datenschnittstelle 37 mit einer Speichereinrichtung 39 verbunden, die einen Teil der aufgenommenen und digitalisierten Empfangssignale beispielsweise auf einer magnetischen Festplatte in Echtzeit aufzeichnet.

Über eine weitere mit dem Datenbus 35 verbundene Datenschnittstelle 41 können die Empfangssignale einem Anzeigemonitor 43 zugeführt werden, um an diesem eine gleichzeitige Beobachtung des aufgenommenen Laufbildfilms zu ermöglichen. Der Anzeigemonitor 43 kann in die Kamera integriert sein oder an einem von der Kamera entfernten Ort angeordnet sein.

Der Datenfluss von der Sensoreinrichtung 31 über die Verstärkungseinrichtung 32, die Digitalisierungseinrichtung 33 und den Datenbus 35 an die Datenschnittstelle 37 und die Speichereinrichtung 39 einerseits und an die Datenschnittstelle 41 und den Anzeigemonitor 43 andererseits wird durch eine Elektroniksteuereinrichtung 45 gesteuert, die zu diesem Zweck mit den genannten Komponenten 31, 33, 35, 37, 39, 41, 43 verbunden ist. Insbesondere steuert die Elektroniksteuereinrichtung 45 das Auslesen der Empfangssignale der einzelnen Sensorelemente der Sensoreinrichtung 31.

Außerdem ist eine Kamerasteuereinrichtung 47 vorgesehen, die mit der Aufnahmeoptik 11, mit der Elektroniksteuereinrichtung 45, mit der Speichereinrichtung 39 und ferner mit einem Kamerasensor 49 verbunden ist, der beispielsweise die Helligkeit der aufzunehmenden Filmszene oder einzelner Bereiche hiervon detektiert. Die Kamerasteuereinrichtung 47 synchronisiert den Ablauf der digitalen Laufbildaufnahme mit der Steuerung oder Signalverarbeitung der weiteren Kamerakomponenten, und sie ermöglicht über eine - in Fig. 1 nicht gezeigte - Anwenderschnittstelle die Eingabe von Einstellparametern durch den Kameramann.

Die Kamera gemäß Fig. 1 bildet somit eine digitale Laufbildkamera, die das Aufnehmen und Abspeichern von Bildsignaldaten in einem digitalen Format ermöglicht, und die gleichzeitig eine elektrooptische Kontrollbeobachtung der aufgenommenen Daten an dem Anzeigemonitor 43 erlaubt.

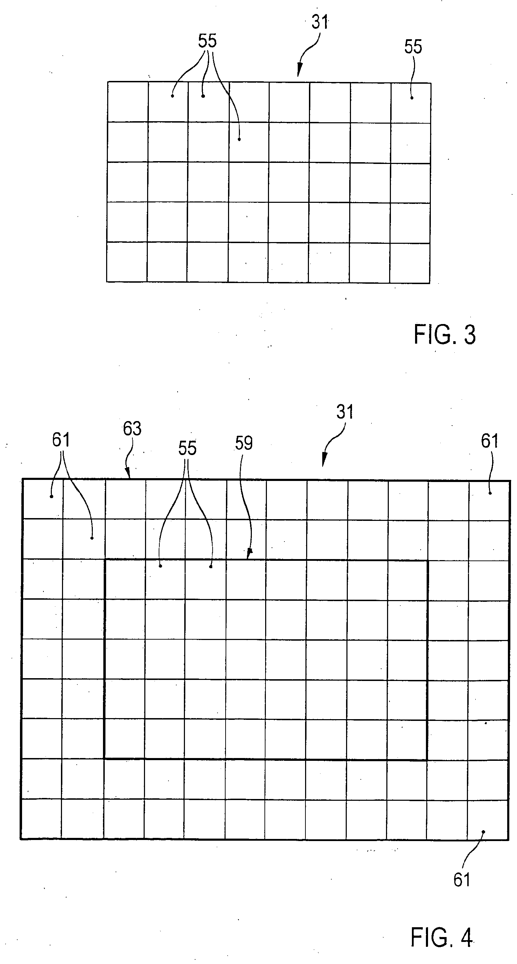

Fig. 3 zeigt schematisch eine bekannte matrixförmige Unterteilung der lichtempfindlichen Vorderseite einer Sensoreinrichtung 31 in mehrere Sensorelemente 55, wobei zur vereinfachten Darstellung lediglich eine geringe Anzahl von Sensorelementen gezeigt ist.

Fig. 4 zeigt eine erfindungsgemäße Ausführungsform der Sensoreinrichtung 31 der Laufbildkamera gemäß Fig. 1, bei der die Sensorelemente 55 einem zentralen Flächenbereich 59 der Sensoreinrichtung 31 zugeordnet sind und zusätzliche Sensorelemente 61 einem rahmenförmigen Flächenbereich 63 zugeordnet sind, der den zentralen Flächenbereich 59 umgibt. Der zentrale Flächenbereich 59 besitzt einen rechteckigen Außenumriss, und der rahmenförmige Flächenbereich 63 weist eine hierzu komplementäre, rechteckige Innenkontur auf.

Diese Unterteilung wird dazu verwendet, lediglich die Empfangssignale der Sensorelemente 55 des zentralen Flächenbereichs 59 (Aufzeichnungsempfangssignale) für die Aufzeichnung bzw. Speicherung des eigentlichen Laufbilds innerhalb der Speichereinrichtung 39 heranzuziehen. Hierfür ist bei der Kamera gemäß Fig. 1 die Speichereinrichtung 39 über die Datenschnittstelle 37 ausschließlich mit den Sensorelementen 55 des zentralen Flächenbereichs 59 gekoppelt.

Die Empfangssignale der Sensorelemente 61 des rahmenförmigen Flächenbereichs 63 (Überwachungsempfangssignale) können dagegen gemeinsam mit den Aufzeichnungsempfangssignalen zusätzlich für eine Beobachtung der aufgenommenen Filmszene an dem Anzeigemonitor 43 verwendet werden, wobei die Unterteilung der Sensoreinrichtung 31 in die Bereiche 59, 63 einer Unterteilung des beobachtbaren Bilds in einen zentralen Bildausschnitt und einen umgebenden rahmenförmigen Bildausschnitt entspricht. Das an dem Anzeigemonitor 43 beobachtbare Bild ist somit größer als das tatsächlich gespeicherte Laufbild. Hierfür ist bei der Kamera gemäß Fig. 1 der Anzeigemonitor 43 über die Datenschnittstelle 41 mit den Sensorelementen 55 des zentralen Flächenbereichs 59 und den Sensorelementen 61 des rahmenförmigen Flächenbereichs 63 gekoppelt. Aufgrund dieser erweiterten Beobachtungs- und Überwachungsmöglichkeit kann beispielsweise eine unbeabsichtigte Aufzeichnung eines in den Bildrand hineinragenden Mikrofons rechtzeitig erkannt und verhindert werden.

Zusammenfassend werden bei der in Fig. 1 gezeigten Laufbildkamera die Empfangssignale aller Sensorelemente 55, 61 der Sensoreinrichtung 31 digitalisiert und gegebenenfalls digital korrigiert. Diese Daten werden dann dem digitalen Datenbus 35 zugeführt, der eine hohe Bandbreite besitzt. An den Datenbus 35 sind die zwei (oder mehr) Schnittstellenschaltungen 37, 41 angeschlossen, die so angesteuert werden können, dass nur ein Teil der an dem Datenbus 35 anliegenden Daten weitergeleitet wird. Beispielsweise kann die Datenschnittstelle 37 die Aufzeichnungsempfangssignale des zentralen Flächenbereichs 59 in höchster Auflösung, d.h. ohne Informationsverringerung, an die Speichereinrichtung 39 übermitteln. Die Datenschnittstelle 41 gibt zusätzlich zu den Aufzeichnungsempfangssignalen auch die Überwachungsempfangssignale des rahmenförmigen Flächenbereichs 63 an den Anzeigemonitor 43 weiter, wobei die Datenmenge vor der Weiterleitung an den Anzeigemonitor 43 reduziert oder komprimiert wird, entsprechend der Auflösung des Anzeigemonitors 43.

Die erläuterte Unterteilung der Sensorelemente 55, 61 in den zentralen und den rahmenförmigen Flächenbereich 59 bzw. 63 kann physikalisch erfolgen, beispielsweise durch unterschiedliche Ausführung der Sensorelemente 55, 61 in den beiden Flächenbereichen 59 bzw. 63, insbesondere mit unterschiedlicher dynamischer, farblicher und/oder zeitlicher Auflösung. Zum Beispiel kann auch eine fest vorgegebene, unterschiedliche Verschaltung der Sensorelemente 55, 61 innerhalb der beiden Flächenbereiche 59 bzw. 63 vorgesehen sein.

Alternativ zu einer derartigen physikalischen Unterteilung der Flächenbereiche 59, 63 kann die gesamte lichtempfindliche Fläche der Sensoreinrichtung 31 mit gleichartigen Sensorelementen 55, 61 bestückt sein, wobei die Zuordnung zu dem zentralen und dem rahmenförmigen Flächenbereich 59 bzw. 63 durch das Auslesen oder die Ansteuerung der Sensorelemente 55, 61 eingestellt wird. Dabei können die Sensorelemente 55, 61 der unterschiedlichen Flächenbereiche 59, 63 nach demselben oder nach unterschiedlichen Verfahren ausgelesen werden.

In beiden Fällen der Unterteilung können die Aufzeichnungsempfangssignale und die Überwachungsempfangssignale über getrennte Datenpfade geleitet werden, um den Aufwand für die Verarbeitung der entstehenden Datenmenge verringern zu können, insbesondere durch frühzeitige Reduktion der für das Anzeigegerät 43 vorgesehenen Datenmenge.

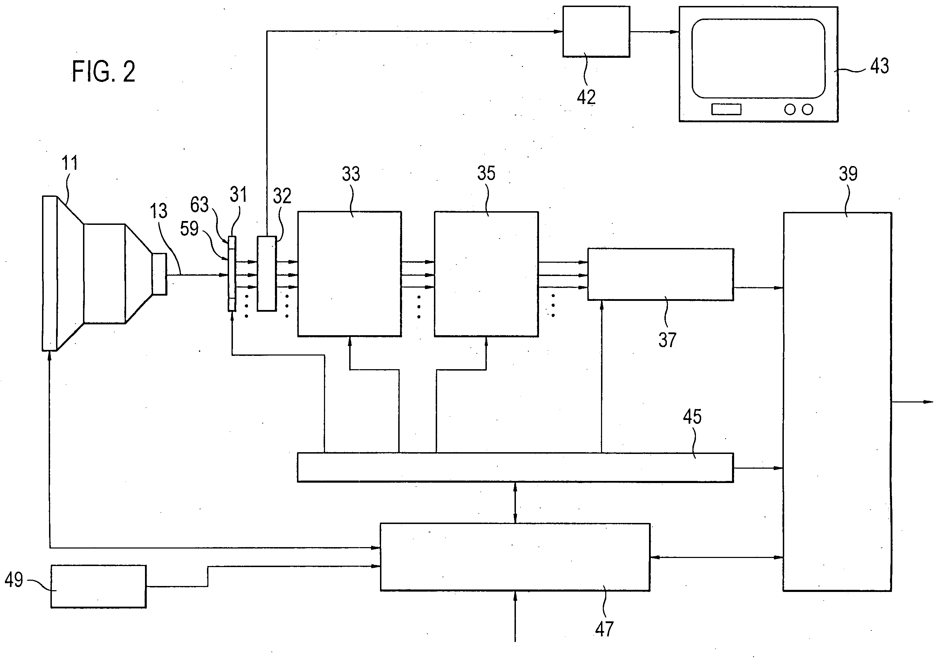

Fig. 2 zeigt eine weitere Ausführungsform einer erfindungsgemäßen Laufbildkamera, wobei der Ausführungsform gemäß Fig. 1 entsprechende Komponenten mit denselben Bezugszeichen gekennzeichnet sind. Im Unterschied zu der Ausführungsform gemäß Fig. 1 erfolgt die Übermittlung der Empfangssignale der Sensoreinrichtung 31 an den Anzeigemonitor 43 über eine analoge Bildaufbereitungsschaltung 42, die zu diesem Zweck eingangsseitig mit der Verstärkungseinrichtung 32 und ausgangsseitig mit dem Anzeigemonitor 43 verbunden ist. Dementsprechend ist dem Anzeigemonitor 43 keine eigene Datenschnittstelle (41 in Fig. 1) zur Anbindung an den digitalen Datenbus 35 zugeordnet.

Bei der in Fig. 2 gezeigten Laufbildkamera werden nur die Aufzeichnungsempfangssignale des zentralen Flächenbereichs 59 digitalisiert und in digitaler Form über den Datenbus 35 und die Datenschnittstelle 37 an die Speichereinrichtung 39 zur Speicherung übermittelt. Hingegen werden die Signale aller Sensorelemente 55, 61, also die Aufzeichnungsempfangssignale und die Überwachungsempfangssignale, auf einem parallelen analogen Ast 42 zur Anzeige auf dem Anzeigemonitor 43 aufbereitet. Das am Anzeigemonitor 43 gezeigte Kontrollbild zeigt somit wiederum eine Bildfläche, die sowohl dem zentralen Flächenbereich 59 als auch dem rahmenförmigen Flächenbereich 63 der Sensoreinrichtung 31 entspricht. Das gezeigte Kontrollbild ermöglicht also eine Kontrolle des die eigentliche Aufzeichnungsfläche umgebenden Bereichs.

Alternativ zu den in Fig. 1 und 2 gezeigten Ausführungsformen können die zur Kontrollwiedergabe an dem Anzeigemonitor 43 vorgesehenen Empfangssignale auch an jeder anderen Stelle der Signalbearbeitungskette abgezweigt werden. Ferner ist es möglich, zum einen ein niedrigauflösendes Signal, das sowohl dem zentralen Flächenbereich 59 als auch dem rahmenförmigen Flächenbereich 63 der Sensoreinrichtung 31 entspricht, mit einem hochauflösenden Signal, das nur dem zentralen Flächenbereich 59 entspricht, zu kombinieren. In diesem Fall kann durch eine entsprechende Bilderzeugungsschaltung an dem Anzeigemonitor 43 ein Kontrollbild erzeugt werden, das in einem zentralen Bildbereich eine höhere Auflösung aufweist als in einem umgebenden rahmenförmigen Bildbereich.

Bei dem in Fig. 1 und 2 jeweils gezeigten Ausführungsbeispiel ist die Sensoreinrichtung 31 durch einen CMOS-Sensor gebildet, dessen Empfangselemente individuell angesteuert werden können, um zu einem beliebigen Zeitpunkt ein Rücksetzen oder ein nachfolgendes Auslesen der fotoelektrischen Ladung bzw. eines entsprechenden Spannungssignals zu bewirken.

Bei einem derartigen CMOS-Sensor wird das ein Sensorelement beaufschlagende Licht in eine fotoelektrische Ladung und dadurch letztlich in ein Spannungssignal umgesetzt, dessen Wert während der Dauer der Lichtbeaufschlagung zunimmt. Ein einzelnes Sensorelement kann kurzgeschlossen und somit rückgesetzt werden, um den Spannungswert auf Null zu setzen und somit die Belichtungsdauer zu einem definierten Zeitpunkt beginnen zu lassen. Ebenso kann das Auslesen dieses Sensorelements zu einem beliebigen, definierten Zeitpunkt erfolgen, um dadurch ein Empfangssignal zu erhalten, das einer vorgegebenen Belichtungsdauer entspricht. Da also sowohl der Anfangszeitpunkt als auch der Endzeitpunkt der Belichtungsdauer beliebig eingestellt werden können, kann letztlich auch die Frequenz, mit der die Bilddatensätze aller Sensorelemente gemeinsam erzeugt werden, variiert werden, wie nachfolgend noch erläutert wird. Der CMOS-Sensor 31 ermöglicht somit eine Variierung der Bildaufnahmefrequenz, die bei einem Sensor mit festem Auslesetakt - wie beispielsweise bei einem CCD-Sensor - nicht möglich ist.

Bei der in Fig. 1, 2 und 4 gezeigten Sensoreinrichtung 31 erfolgt die Steuerung der Belichtungszeit und der Bildaufnahmefrequenz vorzugsweise rein elektronisch. Alternativ oder unterstützend ist es jedoch auch möglich, die Abdunklung bzw. Lichtbeaufschlagung der Sensoreinrichtung 31 über eine Rotationsblende mit wenigstens einer Durchlassöffnung und einem Abdunklungsbereich zu beeinflussen. Durch Drehantrieb einer derartigen Rotationsblende kann die Belichtungszeit der Sensoreinrichtung gesteuert oder hinsichtlich einer elektronischen Steuerung zusätzlich elektromechanisch unterstützt werden.

Zu der Kamera gemäß Fig. 1 und 2 ist noch anzumerken, dass die Sensoreinrichtung 31, die Verstärkungseinrichtung 32 und vorzugsweise auch die Digitalisierungseinrichtung 33 durch einen einzigen Baustein realisiert sein können. In diesem Fall ist jedem Sensorelement in integrierter Bauweise ein eigener Verstärker bzw. ein eigener Analog/DigitalWandler zugeordnet. Ferner können Schaltungen zur Impedanzanpassung vorgesehen sein.

Außerdem kann das Auslesen, das Verstärken oder das Digitalisieren der Empfangssignale der Sensorelemente selbstverständlich auch vollständig oder teilweise sequentiell erfolgen. Die Verstärkungseinrichtung 32 und die Digitalisierungseinrichtung 33 benötigen dann jeweils nur einen einzigen Signalverstärker bzw. einen einzigen Analog/Digital-Wandler. Es ist beispielsweise auch möglich, dass letztlich lediglich die an den Anzeigemonitor 43 übermittelten Empfangssignale rein sequentiell übertragen werden, während die Übermittlung der Aufzeichnungsempfangssignale über die Datenschnittstelle 37 an die Speichereinrichtung 39 zumindest teilweise parallel erfolgt. In diesem Fall kann dem Anzeigemonitor 43 beispielsweise ein Multiplexer oder ein Schieberegister vorgeschaltet sein.

Hinsichtlich des Abspeicherns der digitalen Bilddaten ist noch anzumerken, dass durch die Elektroniksteuereinrichtung 45 ein derartiges Datenformat vorgegeben werden kann, das nicht nur das Abspeichern der digitalisierten Empfangssignale der Sensoreinrichtung 31 erlaubt, sondern auch das zusätzliche Speichern von zugehörigen Aufnahmeparametern. Beispielsweise können die mittels der Kamerasteuereinrichtung 47 eingestellte Blendenöffnung der Aufnahmeoptik 11, die mittels des Kamerasensors 49 detektierten Helligkeitswerte, eine von einer - nicht gezeigten - Uhr vorgegebene Referenzzeit oder die aktuelle Bildaufnahmefrequenz als Aufnahmeparameter in der Speichereinrichtung 39 mit abgespeichert werden.

Zwischen der Speichereinrichtung 39 und der Datenschnittstelle 37, sowie zwischen dem Anzeigemonitor 43 und der Datenschnittstelle 41 oder der Bildaufbereitungsschaltung 42 kann anstelle einer drahtgebundenen Verbindung auch eine drahtlose Verbindung, insbesondere eine Funkverbindung vorgesehen sein.

Gemäß einer vorteilhaften Weiterbildung der in Fig. 1 und 2 gezeigten Laufbildkamera kann die Frequenz, mit der die einzelnen, aufeinander folgenden Laufbilder mittels der Sensoreinrichtung 31 aufgenommen werden, durch Zusammenwirken der Kamerasteuereinrichtung 47 und der Elektroniksteuereinrichtung 45 mit der Sensoreinrichtung 31 variiert werden, und zwar gemäß einem über die Anwenderschnittstelle und die Kamerasteuereinrichtung 47 einstellbaren Vorgabewert. Dadurch kann die Bildaufnahmefrequenz vor oder während einer Aufnahme kontinuierlich verringert oder erhöht werden, um Zeitraffer- bzw. Zeitlupenaufnahmen durchzuführen. Bei einer derartigen Variierung der Bildaufnahmefrequenz wird beispielsweise mittels der Elektroniksteuereinrichtung 45 die Frequenz geändert, mit der die Empfangssignale der Sensoreinrichtung 31 ausgelesen werden, welche gemeinsam einen Bilddatensatz bilden.

Ein sequentielles Auslesen der Empfangssignale der in Fig. 4 gezeigten Sensorelemente 55, 61 kann beispielsweise folgendermaßen geschehen: Beginnend mit dem Sensorelement 61, das in der Darstellung gemäß Fig. 4 oben links gezeigt ist, werden zunächst alle Sensorelemente 61 der obersten Zeile von links nach rechts nacheinander und in definierten Zeitintervallen rückgesetzt. Mit anderen Worten werden die bislang an diesen Sensorelementen 61 fotoelektrisch erzeugten Spannungswerte in definierten Zeitabständen auf Null gesetzt.

Anschließend werden die Sensorelemente 61, 55 der zweiten und der folgenden Zeilen in entsprechender Weise, also nacheinander jeweils von links nach rechts rückgesetzt, bis zuletzt das Sensorelement 61 unten rechts erreicht und ebenfalls rückgesetzt bzw. gelöscht wird. Nach dem Rücksetzen eines jeden Sensorelements 55, 61 wird - sofern eine Lichtbeaufschlagung erfolgt - unmittelbar mit der Erzeugung und Ansammlung von fotoelektrischer Ladung begonnen, so dass beispielsweise zum Zeitpunkt des Rücksetzens des Sensorelements 61 unten rechts in dem Sensorelement 61 oben links bereits eine gewisse Signalladung erzeugt worden ist.

Nach einem derartigen sequentiellen Rücksetzen aller Sensorelemente 55, 61 werden die Empfangssignale dieser Sensorelemente ausgelesen, und zwar wiederum zu definierten Zeitpunkten und in der erläuterten Reihenfolge, also zeilenweise von links nach rechts beginnend mit dem Sensorelement 61 oben links bis zu dem Sensorelement 61 unten rechts. Dadurch wird für jedes Sensorelement 55, 61 ein fotoelektrischer Spannungswert bzw. ein Empfangssignal ausgelesen, das einer bestimmten, bekannten Belichtungszeit entspricht. Ein derartiges sequentielles Rücksetzen und Auslesen der Sensorelemente 55, 61 kann beispielsweise durch die Elektroniksteuereinrichtung 45 gemäß Fig. 1 und 2 veranlasst werden.

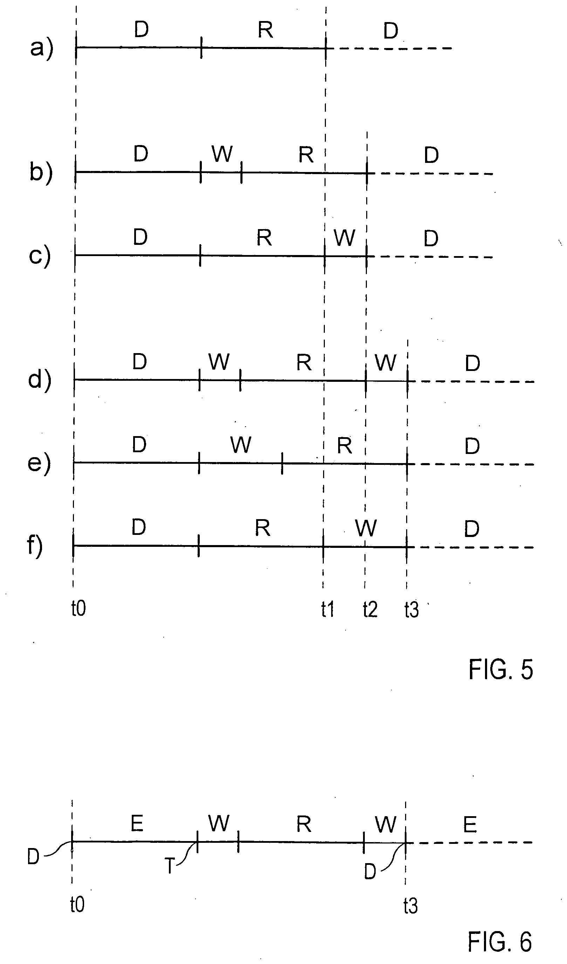

Fig. 5 zeigt in einem Zeitdiagramm, wie bei einem sequentiellen Rücksetzen und Auslesen von Sensorelementen 55, 61 gemäß Fig. 4 eine variable Bildaufnahmefrequenz verwirklicht werden kann. Dargestellt sind beispielhaft sechs mögliche Steuerabläufe (a) bis (f), jeweils beginnend ab einem Zeitpunkt t0. Für diese Steuerabläufe sind Löschintervalle D, Ausleseintervalle R und Warteintervalle W gezeigt, die jeweils zeitlich aufeinander folgen.

Ein Löschintervall D entspricht der Dauer des sequentiellen Rücksetzens aller Sensorelemente 55, 61, wie anhand Fig. 4 erläutert. In entsprechender Weise entspricht ein Ausleseintervall R der Zeitdauer des sequentiellen Auslesens der Sensorelemente 55, 61 gemäß Fig. 4. Die Löschintervalle D und die Ausleseintervalle R besitzen stets eine konstante Zeitdauer, sofern mit einem konstanten Rücksetz- und Auslesetakt gearbeitet wird.

Indem zwischen einem Rücksetzvorgang und einem Auslesevorgang, oder zwischen einem Auslesevorgang und einem Rücksetzvorgang für die Dauer unterschiedlicher Warteintervalle W gewartet wird, können die Bildaufnahmefrequenz und/oder die Belichtungszeit variiert werden.

Beispielsweise ist in Fig. 5 für die Steuerabfolge (b) gezeigt, dass nach dem sequentiellen Rücksetzen aller Sensorelemente 55, 61 innerhalb des Löschintervalls D zunächst ein Warteintervall W verstreicht, bevor während eines Ausleseintervalls R die Sensorelemente 55, 61 nacheinander ausgelesen werden und unmittelbar anschließend während eines weiteren Löschintervalls D wieder sequentiell rückgesetzt werden. Dadurch beansprucht ein vollständiger Bildaufnahmezyklus eine Dauer t2.

Dieselbe Dauer t2 für einen vollständigen Bildaufnahmezyklus wird auch benötigt, falls unmittelbar nach Beendigung des Löschintervalls D das Ausleseintervall R folgt und erst nach diesem Auslesen ein Warteintervall W verstreicht, bevor die Sensorelemente 55, 61 erneut rückgesetzt werden. Dies ist in Fig. 5 für die Steuerabfolge (c) gezeigt.

Somit wird durch die Steuerabfolgen (b) und (c) dieselbe Dauer t2 eines vollständigen Bildaufnahmezyklus benötigt, so dass in beiden Fällen dieselbe Bildaufnahmefrequenz erzielt wird. Allerdings ist bei der Steuerabfolge (b) die Belichtungszeit verlängert, da vor dem Auslesen der Sensorelemente 55, 61 erst ein Warteintervall W verstreicht.

Eine größere Dauer t3 eines vollständigen Bildaufnahmezyklus und somit eine verringerte Bildaufnahmefrequenz kann erreicht werden, indem die Sensoreinrichtung 31 derart gesteuert wird, dass längere und/oder mehrere Warteintervalle W zwischen dem Rücksetzen und Auslesen der Sensorelemente 55, 61 verstreichen. Dies ist beispielhaft für die Steuerabfolgen (d), (e) und (f) gezeigt.

Beispielsweise wird bei der Steuerabfolge (d) sowohl vor als auch nach dem sequentiellen Auslesen der Sensorelemente 55, 61 für die Dauer eines Warteintervalls W abgewartet, bevor erneut mit dem Auslesen bzw. Rücksetzen begonnen wird. Dadurch wird dieselbe Belichtungszeit wie bei der Steuerabfolge (b) erreicht, jedoch bei einer verringerten Bildaufnahmefrequenz.

Die Steuerabfolge (e) gemäß Fig. 5 zeigt demgegenüber das Verstreichen eines längeren Warteintervalls W nach Beendigung des sequentiellen Rücksetzens aller Sensorelemente 55, 61, wobei unmittelbar nach dem nachfolgenden Auslesen der Sensorelemente wieder mit dem Rücksetzen begonnen wird. Bei dieser Steuerabfolge wird dieselbe Dauer t3 eines vollständigen Bildaufnahmezyklus und somit dieselbe Bildaufnahmefrequenz erreicht, wie bei der Steuerabfolge (d). Allerdings ist hier die Belichtungszeit - aufgrund des verlängerten Warteintervalls W - vergrößert.

Auch bei der Steuerabfolge (f) wird dieselbe Bildaufnahmefrequenz erzielt wie bei den Steuerabfolgen (d) und (e). Indem hier ein vergleichsweise langes Warteintervall W zwischen der Beendigung des Auslesens des letzten Sensorelements 61 und dem Zeitpunkt des Rücksetzens des ersten Sensorelements 61 verstreicht, wird diese vergleichsweise geringe Bildaufnahmefrequenz bei einer kurzen Belichtungszeit erreicht.

Die höchstmögliche Bildaufnahmefrequenz, entsprechend einer kürzestmöglichen Dauer t1 eines vollständigen Bildaufnahmezyklus, ergibt sich, falls das Löschintervall D und das Ausleseintervall R ohne zwischenzeitliche Warteintervalle jeweils unmittelbar aufeinander folgen. Dies ist in Fig. 5 als Steuerabfolge (a) gezeigt.

Zu den in Fig. 5 gezeigten Steuerabfolgen ist noch anzumerken, dass diese rein elektronisch verwirklicht werden können, nämlich durch entsprechende Ansteuerung der Sensorelemente 55, 61 mittels der in Fig. 1 und 2 jeweils gezeigten Elektroniksteuereinrichtung 45.

Die Dauer der unterschiedlichen Warteintervalle W kann beispielsweise in Inkrementen desjenigen hochfrequenten Takts gewählt werden, mit dem die Sensorelemente 55, 61 sequentiell rückgesetzt bzw. ausgelesen werden. Allerdings ist es auch möglich, variable Dauern für die Warteintervalle W vorzusehen, um die Bildaufnahmefrequenz stufenlos verändern zu können. Ebenso ist es möglich, den hochfrequenten Takt, mit dem die Sensorelemente 55, 61 nacheinander rückgesetzt oder ausgelesen werden, variierbar zu steuern.

Außerdem ist zu den erläuterten Steuerabfolgen anzumerken, dass - aufgrund der Verwendung eines CMOS-Sensors 31 - die Ansteuerung der Sensorelemente gemäß Fig. 4 auch in einer beliebigen anderen Reihenfolge erfolgen kann, beispielsweise beginnend mit dem Sensorelement 61, das in der Darstellung gemäß Fig. 4 oben rechts gezeigt ist, sequentiell von rechts nach links oder von oben nach unten, oder völlig wahlfrei, um bestimmte Effekte zu erzielen.

Insbesondere ist es möglich, eine Unterscheidung der Ausleseart oder der Auslesereihenfolge nach der Unterteilung der Sensorelemente 55, 61 in die beiden Flächenbereiche 59 bzw. 63 zu treffen. Beispielsweise kann für den zentralen Flächenbereich 59 und den rahmenförmigen Flächenbereich 63 jeweils unabhängig voneinander ein paralleles Auslesen der Aufzeichnungsempfangssignale bzw. der Überwachungsempfangssignale vorgesehen sein, insbesondere über eine jeweils zugeordnete Datenschnittstelle. Ferner kann alternativ zu der anhand von Fig. 4 und 5 erläuterten rein sequentiellen Belichtung der Sensorelemente 55, 61 ein so genannter Simultan-Shutter realisiert werden. Hierfür können die Empfangssignale aller Sensorelemente 55, 61 gemäß Fig. 4 gleichzeitig rückgesetzt werden. Außerdem ist jedem Sensorelement 55, 61 ein Speicherelement, beispielsweise in Form eines Kondensators zugeordnet, in den jeweils die für das betreffende Sensorelement 55, 61 erzeugte fotoelektrische Ladung verschoben werden kann. Die Speicherelemente sind dabei so verschaltet bzw. ansteuerbar, dass nach diesem Ladungstransfer innerhalb der Speicherelemente auch bei weiterer Lichtbeaufschlagung des Sensors 31 keine weitere Erhöhung des jeweiligen Empfangssignals erfolgt. Auch dieser Ladungstransfer kann für alle Sensorelemente 55, 61 gleichzeitig durchgeführt werden.

Da somit sowohl der Anfangszeitpunkt als auch der Endzeitpunkt der Belichtung für alle Sensorelemente 55, 61 gleich ist, unterliegen die Sensorelemente hinsichtlich ihrer jeweiligen Belichtungsdauer keiner Phasenverschiebung relativ zueinander.

Nach dem simultanen Ladungstransfer kann das Auslesen der Empfangssignale, beispielsweise durch Abgreifen der an den Speicherelementen anliegenden Spannungswerte, in beliebiger Reihenfolge erfolgen, beispielsweise sequentiell, gruppenweise parallel oder vollständig parallel. Anschließend werden die Sensorelemente 55, 61 wieder gleichzeitig rückgesetzt.

Eine erwünschte Änderung der Bildaufnahmefrequenz und/oder der Belichtungszeit kann bei einem derartigen Simultan-Shutter dadurch realisiert werden, dass der Anfangszeitpunkt und/oder der Endzeitpunkt der simultanen Belichtung der Sensorelemente 55, 61 variiert werden. Beispielsweise kann zwischen dem simultanen Rücksetzen aller Sensorelemente 55, 61 und dem simultanen Verschieben der fotoelektrischen Ladung in die Speicherelemente, oder zwischen dem simultanen Verschieben und dem simultanen Rücksetzen für die Dauer unterschiedlicher Warteintervalle W gewartet werden.

Fig. 6 zeigt eine derartige simultane Steuerabfolge, die hinsichtlich der Dauer t3 eines Bildaufnahmeaufnahmezyklus und somit hinsichtlich der Bildaufnahmefrequenz der sequentiellen Steuerabfolge (d) gemäß Fig. 5 entspricht. Hier wird zu einem Löschzeitpunkt D das simultane Rücksetzen aller Sensorelemente 55, 61 ausgelöst. Während eines nachfolgenden Belichtungsintervalls E werden die Sensorelemente 55, 61 gleichzeitig belichtet. Zu einem Transferzeitpunkt T werden die fotoelektrischen Ladungen der Sensorelemente 55, 61 wie erläutert, simultan in das jeweils zugeordnete Speicherelement verschoben. Nach Verstreichen eines ersten Warteintervalls W werden die Speicherelemente während eines Ausleseintervalls R ausgelesen. Nach Verstreichen eines weiteren Warteintervalls W, und zwar zu einem Löschzeitpunkt D, werden die Sensorelemente 55, 61 wieder simultan rückgesetzt, um ein neues Belichtungsintervall E einzuleiten.

In entsprechender Weise wie im Zusammenhang mit Fig. 5 erläutert können die in Fig. 6 gezeigten Warteintervalle W jeweils variiert, insbesondere verlängert, verkürzt oder auf Null gesetzt werden, um für alle Sensorelemente 55, 61 synchron die Dauer t3 eines Bildaufnahmeaufnahmezyklus und somit die Bildaufnahmefrequenz und ferner die Belichtungszeit E zu variieren.

### Bezugszeichenliste

- 11: Aufnahmeoptik
- 13: Empfangsstrahlengang
- 31: Sensoreinrichtung
- 32: Verstärkungseinrichtung
- 33: Digitalisierungseinrichtung
- 35: Datenbus
- 37: Datenschnittstelle
- 39: Speichereinrichtung
- 41: Datenschnittstelle
- 42: analoge Bildaufbereitungsschaltung
- 43: Anzeigemonitor
- 45: Elektroniksteuereinrichtung
- 47: Kamerasteuereinrichtung
- 49: Kamerasensor
- 55: Sensorelement
- 59: zentraler Flächenbereich
- 61: Sensorelement
- 63: rahmenförmiger Flächenbereich

- D: Löschintervall oder -zeitpunkt
- E: Belichtungsintervall
- R: Ausleseintervall
- T: Transferzeitpunkt
- W: Warteintervall
- t0, t1, t2, t3: Zeitpunkt

## Patentansprüche

1. Digitale Laufbildkamera, wenigstens mit
- einer optoelektronischen Sensoreinrichtung (31) zum Aufnehmen von Laufbildern, die einen einzigen optoelektronischen Sensor aufweist, wobei die Sensoreinrichtung in einer flächigen Anordnung mehrere Sensorelemente (55, 61) zur Erzeugung eines jeweiligen Empfangssignals in Abhängigkeit von einer Lichtbeaufschlagung aufweist,
- einer Steuereinrichtung (45, 47) zur Steuerung eines Auslesens der Empfangssignale der Sensorelemente, und
- einer Digitalisierungseinrichtung (33) zur Digitalisierung von Empfangssignalen der Sensorelemente,
wobei ein Teil der Sensorelemente (55, 61) zur Erzeugung von Aufzeichnungsempfangssignalen einem zentralen Flächenbereich (59) der Sensoreinrichtung (31) zugeordnet ist und ein anderer Teil der Sensorelemente zur Erzeugung von Überwachungsempfangssignalen einem rahmenförmigen Flächenbereich (63) zugeordnet ist, der den zentralen Flächenbereich (59) umgibt, um lediglich die Aufzeichnungsempfangssignale des zentralen Flächenbereichs (59) letztlich zur Speicherung heranzuziehen, wobei die Sensorelemente (55, 61) in dem zentralen Flächenbereich (59) und in dem rahmenförmigen Flächenbereich (63) in derselben räumlichen Auflösung vorgesehen sind; und
wobei die Laufbildkamera mit wenigstens einer Anzeigeeinrichtung (43) zur Anzeige sowohl der Aufzeichnungsempfangssignale als auch der Überwachungsempfangssignale verbunden ist, um die Aufzeichnungsempfangssignale und die Überwachungsempfangssignale zur Beobachtung und Überwachung einer aktuellen Aufnahme heranzuziehen;
**dadurch gekennzeichnet,**
**dass** die Unterteilung der Sensorelemente (55, 61) in den zentralen Flächenbereich (59) und den rahmenförmigen Flächenbereich (63) dauerhaft festgelegt oder vorbestimmbar ist.

2. Laufbildkamera nach Anspruch 1,
**dadurch gekennzeichnet,**
**dass** die Unterteilung der Sensorelemente (55, 61) in den zentralen Flächenbereich (59) und den rahmenförmigen Flächenbereich (63) einstellbar ist, um die Größe und/oder die Form der Flächenbereiche (59, 63) ändern zu können.

3. Laufbildkamera nach Anspruch 1 oder 2,
**dadurch gekennzeichnet,**
**dass** die Anzeigeeinrichtung (43) in die Laufbildkamera integriert ist, und/oder
**dass** die Anzeigeeinrichtung (43) mit der Laufbildkamera über Kabel oder über Funk verbunden ist.

4. Laufbildkamera nach einem der Ansprüche 1 bis 3,
**dadurch gekennzeichnet,**
**dass** die Anzeigeeinrichtung (43) zur Anzeige der Aufzeichnungsempfangssignale und der Überwachungsempfangssignale in einer solchen Anordnung ausgebildet ist, die der Unterteilung der Sensorelemente (55, 61) in den zentralen Flächenbereich (59) und den rahmenförmigen Flächenbereich (63) entspricht,
und/oder
**dass** die Anzeigeeinrichtung (43) mit einem Bildgenerator gekoppelt ist, durch den ein Trennrahmensignal zur Darstellung eines Trennrahmens zwischen den Aufzeichnungsempfangssignalen und den Überwachungsempfangssignalen erzeugbar ist.

5. Laufbildkamera nach einem der vorhergehenden Ansprüche,
**dadurch gekennzeichnet,**
**dass** lediglich die Aufzeichnungsempfangssignale zur Übertragung in eine Speichereinrichtung (39) vorgesehen sind,
und/oder
**dass** die Sensorelemente (55, 61) dergestalt mit der Steuereinrichtung (45, 47) gekoppelt sind, dass die Aufzeichnungsempfangssignale und die Überwachungsempfangssignale getrennt auslesbar sind.

6. Laufbildkamera nach einem der vorhergehenden Ansprüche,
**dadurch gekennzeichnet,**
**dass** dem zentralen Flächenbereich (59) eine Schnittstelle (37) zur Übertragung der Aufzeichnungsempfangssignale an eine Speichereinrichtung (39) zugeordnet ist, und/oder
**dass** dem zentralen Flächenbereich (59) eine Schnittstelle (41, 42) zur Übertragung der Aufzeichnungsempfangssignale an die Anzeigeeinrichtung (43) zugeordnet ist, und/oder
**dass** dem rahmenförmigen Flächenbereich (63) eine Schnittstelle (41, 42) zur Übertragung der Überwachungsempfangssignale an die Anzeigeeinrichtung (43) zugeordnet ist.

7. Laufbildkamera nach Anspruch 6,
**dadurch gekennzeichnet,**
**dass** die an die Anzeigeeinrichtung (43) zu übertragenden Aufzeichnungsempfangssignale und/oder Überwachungsempfangssignale mittels der zugeordneten Schnittstelle (41, 42) hinsichtlich ihrer Datenmenge reduzierbar oder komprimierbar sind,
und/oder
**dass** die zur Übertragung der Aufzeichnungsempfangssignale und der Überwachungsempfangssignale an die Anzeigeeinrichtung (43) vorgesehene Schnittstelle (42) eine analoge Bildaufbereitungsschaltung aufweist,
wobei diese Schnittstelle (42) vorzugsweise eingangsseitig mit einer Verstärkungseinrichtung (32) verbunden ist, an die zumindest indirekt auch die Schnittstelle (37) zur Übertragung der Aufzeichnungsempfangssignale an die Speichereinrichtung (39) angeschlossen ist.

8. Laufbildkamera nach einem der vorhergehenden Ansprüche,
**dadurch gekennzeichnet,**
**dass** die Sensorelemente (55, 61) zu einem wahlfreien Auslesen ansteuerbar sind, und/oder
**dass** die Zuordnung der Sensorelemente (55, 61) zu dem zentralen Flächenbereich (59) und dem rahmenförmigen Flächenbereich (63) veränderlich vorgebbar ist.

9. Laufbildkamera nach einem der vorhergehenden Ansprüche,
**dadurch gekennzeichnet,**
**dass** die Sensoreinrichtung (31) in dem rahmenförmigen Flächenbereich (63) eine geringere
- Helligkeitsauflösung,
- farbliche Auflösung, und/oder
- zeitliche Auflösung
besitzt als in dem zentralen Flächenbereich (59),
und/oder
**dass** die Ausdehnung des zentralen Flächenbereichs (59) der Sensoreinrichtung (31) einem Zentralbereich einer optimierten Abbildung einer Aufnahmeoptik (11) der Laufbildkamera entspricht.

10. Laufbildkamera nach einem der vorhergehenden Ansprüche,
**dadurch gekennzeichnet,**
**dass** der zentrale Flächenbereich (59) der Sensoreinrichtung (31) einen rechteckigen Außenumriss und der rahmenförmige Flächenbereich (63) eine hierzu komplementäre, rechteckige Innenkontur aufweist.

11. Laufbildkamera nach einem der vorhergehenden Ansprüche,
**dadurch gekennzeichnet,**
**dass** die Sensorelemente (55, 61) der Sensoreinrichtung (31) jeweils mit einem Farbfilter versehen sind,
und/oder
**dass** die Sensorelemente (55, 61) der Sensoreinrichtung (31) farbauflösend ausgebildet sind,
und/oder
**dass** die Sensoreinrichtung (31) einen CMOS-Sensor aufweist.

12. Laufbildkamera nach einem der vorhergehenden Ansprüche,
**dadurch gekennzeichnet,**
**dass** die Sensoreinrichtung (31) mittels der Steuereinrichtung (45, 47) zum Aufnehmen der Laufbilder mit einer vorgebbaren variablen Bildaufnahmefrequenz ansteuerbar ist.

13. Laufbildkamera nach Anspruch 12,
**dadurch gekennzeichnet,**
**dass** zur Variierung der Bildaufnahmefrequenz der Anfangszeitpunkt der Belichtung der Sensorelemente (55, 61) und/oder der Endzeitpunkt der Belichtung der Sensorelemente mittels der Steuereinrichtung (45, 47) steuerbar ist,
und/oder
**dass** die Sensorelemente (55, 61) der Sensoreinrichtung (31) mittels der Steuereinrichtung (45, 47) zu einem sequentiellen Rücksetzen und einem nachfolgenden sequentiellen Auslesen ansteuerbar sind, und/oder
**dass** zur Variierung der Bildaufnahmefrequenz der Takt eines sequentiellen Rücksetzens oder Auslesens der Empfangssignale der Sensorelemente (55, 61) steuerbar ist,
und/oder
**dass** die Sensorelemente der Sensoreinrichtung (31) mittels der Steuereinrichtung (45, 47) zu einem parallelen oder einem gruppenweise parallelen Rücksetzen oder Auslesen ansteuerbar sind, und/oder
**dass** die Bildaufnahmefrequenz stufenlos oder in Inkrementen eines Sensorelement-Auslesetakts variierbar ist.

14. Laufbildkamera nach einem der vorhergehenden Ansprüche,
**dadurch gekennzeichnet,**
**dass** jedem Sensorelement (55, 61) eine eigene Verstärkungseinrichtung (32) zugeordnet ist, die vorzugsweise in die Sensoreinrichtung (31) integriert ist,
und/oder
**dass** jedem Sensorelement (55) des zentralen Flächenbereichs (59) eine eigene Digitalisierungseinrichtung (33) zugeordnet ist, die vorzugsweise in die Sensoreinrichtung (31) integriert ist, und/oder
**dass** jedem Sensorelement (61) des rahmenförmigen Flächenbereichs (63) eine eigene Digitalisierungseinrichtung (33) zugeordnet ist, die vorzugsweise in die Sensoreinrichtung (31) integriert ist.

15. Laufbildkamera nach einem der vorhergehenden Ansprüche,
**dadurch gekennzeichnet,**
**dass** die Belichtungszeit der Sensoreinrichtung (31) durch die Steuereinrichtung (45, 47) elektronisch steuerbar ist,
und/oder
**dass** die Belichtungszeit der Sensorelemente (55, 61) durch die Steuereinrichtung (45, 47) für jedes Sensorelement individuell, für einen Teil der Sensorelemente gemeinsam oder für alle Sensorelemente gemeinsam steuerbar ist,
und/oder
**dass** die Sensorelemente (55, 61) zur aufeinander folgenden Erzeugung mehrerer Empfangssignale ansteuerbar sind, die unterschiedlichen Belichtungszeiten entsprechen und einem einzigen Laufbild zugeordnet sind.

16. Laufbildkamera nach einem der vorhergehenden Ansprüche,
**dadurch gekennzeichnet,**
**dass** eine Kühleinrichtung zur aktiven Kühlung der Sensoreinrichtung (31) vorgesehen ist, wobei die Kühleinrichtung vorzugsweise ein Peltier-Element oder einen Lüfter aufweist,
und/oder
**dass** die Digitalisierungseinrichtung (33) mit wenigstens einer Datenschnittstelle (37) zur Weiterleitung der digitalisierten Aufzeichnungsempfangssignale an eine digitale Speichereinrichtung (39) verbunden ist.

17. Laufbildkamera nach einem der vorhergehenden Ansprüche,
**dadurch gekennzeichnet,**
**dass** wenigstens eine digitale Speichereinrichtung (39) zum Speichern der digitalisierten Aufzeichnungsempfangssignale vorgesehen ist,
wobei die Speichereinrichtung vorzugsweise austauschbar an die Laufbildkamera ankoppelbar ist,
und/oder
wobei die Speichereinrichtung (39) mittels der Steuereinrichtung (45, 47) vorzugsweise zum zusätzlichen Speichern wenigstens eines Aufnahmeparameters steuerbar ist,
und/oder
wobei vorzugsweise eine Uhr zur Bereitstellung einer Uhrzeit vorgesehen ist, wobei mittels der Steuereinrichtung (45, 47) das Speichern einer aktuellen Uhrzeit gemeinsam mit Laufbilddaten oder einem Aufnahmeparameter steuerbar ist.

18. Laufbildkamera nach Anspruch 17,
**dadurch gekennzeichnet,**
**dass** die Speichereinrichtung (39) eine Identifizierungseinrichtung aufweist, durch die ein Identifizierungscode an die Steuereinrichtung (45, 47) übermittelbar ist,
und/oder
**dass** die Laufbildkamera und die Speichereinrichtung (39) für eine drahtlose Übertragung von abzuspeichernden Daten ausgebildet sind, wobei vorzugsweise die Laufbildkamera einen Funksender und die Speichereinrichtung (39) einen Funkempfänger aufweist, und/oder
**dass** zur Aufnahme von abzuspeichernden Daten und Weitergabe der Daten an die Speichereinrichtung (39) eine Zwischenspeichereinrichtung vorgesehen ist.

19. Laufbildkamera nach einem der Ansprüche 17 oder 18,
**dadurch gekennzeichnet,**
**dass** die Speichereinrichtung (39) wenigstens eine Ausgangsschnittstelle zur Ausgabe gespeicherter Daten aufweist,
und/oder
**dass** die Speichereinrichtung (39) zur Ausgabe gespeicherter Daten mit einer Rate steuerbar ist, die von der Rate des Einlesens abzuspeichernder Daten verschieden ist,
und/oder
**dass** die Speichereinrichtung (39) wenigstens einen magnetischen Speicher, einen magnetooptischen Speicher, einen Halbleiterspeicher und/oder einen optischen Speicher aufweist.

20. Laufbildkamera nach einem der vorhergehenden Ansprüche, **gekennzeichnet**
**durch** einen modularen Aufbau, wobei jeweils
- die Sensoreinrichtung (31) gemeinsam mit der Steuereinrichtung (45, 47),
- eine Aufnahmeoptik (11), und / oder
- eine Speichereinrichtung (39)
eine eigene Moduleinheit bildet.

## Claims

1. A digital motion picture camera, at least comprising
- an optoelectronic sensor device (31) for the recording of motion pictures, which has a single optoelectronic sensor, with the sensor device having, in an areal arrangement, a plurality of sensor elements (55, 61) for the production of a respective received signal in dependence on a light exposure;
- a control device (45, 47) for the control of a read-out of the received signals of the sensor elements; and
- a digitizing device (33) for the digitizing of received signals of the sensor elements,
with a part of the sensor elements (55, 61) being associated with a central areal region (59) of the sensor device (31) for the generation of received recording signals and with another part of the sensor elements being associated with a frame-shaped areal region (63), which surrounds the central areal region (59), for the generation of received monitoring signals in order only to ultimately make use of the received recording signals of the central areal region (59) for storage, with the sensor elements (55, 61) in the central areal region (59) and in the frame-shaped areal region (63) being provided at the same spatial resolution; and
wherein the motion picture camera is connected to at least one display device (43) for the display of both the received recording signals and the received monitoring signals in order to make use of the received recording signals and the received monitoring signals for the observation and monitoring of a current recording, **characterized in that**
the division of the sensor elements (55, 61) into the central areal region (59) and into the frame-shaped areal region (63) is permanently fixed or pre-determinable.

2. A motion picture camera in accordance with claim 1,
**characterized in that**
the division of the sensor elements (55, 61) into the central areal region (59) and into the frame-shaped areal region (63) is adjustable in order to be able to change the size and/or the shape of the areal regions (59, 63).

3. A motion picture camera in accordance with claim 1 or claim 2,
**characterized in that**
the display device (43) is integrated into the motion picture camera; and/or
**in that** the display device (43) is connected to the motion picture camera via cable or via wireless transmission.

4. A motion picture camera in accordance with any one of the claims 1 to 3,
**characterized in that**
the display device (43) is formed for the display of the received recording signals and of the received monitoring signals in such an arrangement which corresponds to the division of the sensor elements (55, 61) into the central areal region (59) and into the frame-shaped areal region (63);
and/or
**in that** the display device (43) is coupled to a picture generator by which a cutting frame signal can be generated for the representation of a cutting frame between the received recording signals and the received monitoring signals.

5. A motion picture camera in accordance with any one of the preceding claims,
**characterized in that**
only the received recording signals are provided for transmission into a memory device (39);
and/or
**in that** the sensor elements (55, 61) are coupled to the control device (45, 47) such that the received recording signals and the received monitoring signals can be read out separately.

6. A motion picture camera in accordance with any one of the preceding claims,
**characterized in that**
an interface (37) is associated with the central areal region (59) for the transmission of the received recording signals to a memory device (39); and/or
**in that** an interface (41, 42) is associated with the central areal region (59) for the transmission of the received recording signals to the display device (43); and/or
**in that** an interface (41, 42) is associated with the frame-shaped areal region (63) for the transmission of the received monitoring signals to the display device (43).

7. A motion picture camera in accordance with claim 6,
**characterized in that**
the received recording signals and/or received monitoring signals to be transmitted to the display device (43) can be reduced or compressed with respect to their data volume by means of the associated interface (41, 42);
and/or
**in that** the interface (42) provided for the transmission of the received recording signals and of the received monitoring signals to the display device (43) has an analog picture preparation circuit, with this interface (42) preferably being connected at the input side to an amplifier device (32) to which the interface (37) is also connected, at least indirectly, for the transmission of the received recording signals to the memory device (39).

8. A motion picture camera in accordance with any one of the preceding claims,
**characterized in that**
the sensor elements (55, 61) are controllable for a freely selectable read-out; and/or
**in that** the association of the sensor elements (55, 61) with the central areal region (59) and with the frame-shaped areal region (63) is variably pre-settable.

9. A motion picture camera in accordance with any one of the preceding claims,
**characterized in that**
the sensor device (31) has a lower
- brightness resolution;
- color resolution; and/or
- temporal resolution
in the frame-shaped areal region (63) than in the central areal region (59);
and/or
**in that** the extent of the central areal region (59) of the sensor device (31) corresponds to a central area of an optimized image of a recording optical system (11) of the motion picture camera.

10. A motion picture camera in accordance with any one of the preceding claims,
**characterized in that**
the central areal region (59) of the sensor device (31) has a rectangular outer outline and the frame-shaped areal region (63) has a rectangular inner contour complementary thereto.

11. A motion picture camera in accordance with any one of the preceding claims,
**characterized in that**
the sensor elements (55, 61) of the sensor device (31) are each provided with a color filter;
and/or
**in that** the sensor elements (55, 61) of the sensor device (31) are color resolving;
and/or
**in that** the sensor device (31) has a CMOS sensor.

12. A motion picture camera in accordance with any one of the preceding claims,
**characterized in that**
the sensor device (31) is controllable by means of the control device (45, 47) for the recording of the motion pictures at a pre-settable variable picture recording frequency.

13. A motion picture camera in accordance with claim 12, **characterized in that**
the starting point in time of the exposure of the sensor elements (55, 61) and/or the end point in time of the exposure of the sensor elements is/are controllable by means of the control device (45, 47) for the variation of the picture recording frequency;
and/or
**in that** the sensor elements (55, 61) of the sensor device (31) can be controlled by means of the control device (45, 47) for a sequential resetting and for a subsequent sequential read-out;
and/ or
**in that** the cycle of a sequential resetting or read-out of the received signals of the sensor elements (55, 61) is controllable for the variation of the picture recording frequency;
and/ or
**in that** the sensor elements of the sensor device (31) are controllable by means of the control device (45, 47) for a parallel or a group-wise parallel resetting or read-out;
and/or
**in that** the picture recording frequency is variable continuously or in increments of a sensor element read-out cycle.

14. A motion picture camera in accordance with any one of the preceding claims,
**characterized in that**
each sensor element (55, 61) has its own amplifier device (32) associated with it which is preferably integrated into the sensor device (31);
and/or
**in that** each sensor element (55) of the central areal region (59) has its own digitizing device (33) associated with it which is preferably integrated into the sensor device (31);
and/or
**in that** each sensor element (61) of the frame-shaped areal region (63) has its own digitizing device (33) associated with it which is preferably integrated into the sensor device (31).

15. A motion picture camera in accordance with any one of the preceding claims,
**characterized in that**
the exposure time of the sensor device (31) is electronically controllable by the control device (45, 47);
and/or
**in that** the exposure time of the sensor elements (55, 61) is controllable by the control device (45, 47) for each sensor element individually, for some of the sensor elements together, or for all sensor elements together;
and/or
**in that** the sensor elements (55, 61) are controllable for the sequential production of a plurality of received signals which correspond to different exposure times and are associated with a single motion picture.

16. A motion picture camera in accordance with any one of the preceding claims,
**characterized in that**
a cooling device is provided for the active cooling of the sensor device (31), with the cooling device preferably having a Peltier element or a fan;
and/or
**in that** the digitizing device (33) is connected to at least one data interface (37) for the transmission of the digitized received recording signals to a digital memory device (39).

17. A motion picture camera in accordance with any one of the preceding claims,
**characterized in that**
at least one digital memory device (39) is provided for the storage of the digitized received recording signals,
wherein the memory device is preferably capable of being coupled to the motion picture camera in an exchangeable manner; and/or
wherein the memory device (39) is preferably controllable by means of the control device (45, 47) for the additional storage of at least one recording parameter;
and/or
wherein a clock is preferably provided for the making available of a time signal, with the storage of a current time signal together with motion picture data or with a recording parameter being controllable by means of the control device (45, 47).

18. A motion picture camera in accordance with claim 17, **characterized in that**
the memory device (39) has an identification device by which an identification code can be transmitted to the control device (45, 47); and/or
**in that** the motion picture camera and the memory device (39) are designed for a wireless transmission of data to be stored, with the motion picture camera preferably having a wireless transmitter and the memory device (39) having a wireless receiver;
and/or
**in that** an intermediate memory device is provided for the recording of data to be stored and for the transmission of the data to the memory device (39).

19. A motion picture camera in accordance with one of claims 17 or 18,
**characterized in that**
the memory device (39) has at least one output interface for the outputting of stored data;
and/or
**in that** the memory device (39) for the outputting of stored data is controllable at a rate which is different to the rate of the reading in of data to be stored;
and/or
**in that** the memory device (39) has at least a magnetic memory, a magneto-optical memory, a semi-conductor memory and/or an optical memory.

20. A motion picture camera in accordance with any one of the preceding claims,
**characterized**
**by** a modular design, with
- the sensor device (31) together with the control device (45, 47),
- a recording optical system (11), and/or
- a memory device (39)
each forming its own modular unit.

## Revendications

1. Caméra cinématographique numérique, comportant au moins
- un système capteur optoélectronique (31) pour la prise d'images cinématographiques, qui comprend un seul capteur optoélectronique, le système capteur comprenant plusieurs éléments capteurs (55, 61) en disposition surfacique pour générer un signal de réception respectif en fonction d'une exposition à la lumière,
- un système de commande (45, 47) pour commander une lecture des signaux de réception des éléments capteurs, et
- un système de numérisation (33) pour numériser les signaux de réception des éléments capteurs,
dans laquelle
une partie des éléments capteurs (55, 61) destinés à générer des signaux de réception de prise est associée à une zone surfacique centrale (59) du système capteur (31) et une autre partie des éléments capteurs destinés à générer des signaux de réception de surveillance est associée à une zone surfacique (63) en forme de cadre qui entoure la zone surfacique centrale (59), afin d'avoir recours finalement uniquement aux signaux de réception de prise de la zone surfacique centrale (59) pour la mémorisation, les éléments capteurs (55, 61) dans la zone surfacique centrale (59) et dans la zone surfacique (63) en forme de cadre étant prévus à la même résolution spatiale ; et
la caméra cinématographique est connectée à au moins un système d'affichage (43) pour afficher aussi bien les signaux de réception de prise que les signaux de réception de surveillance, afin d'avoir recours aux signaux de réception de prise et les signaux de réception de surveillance pour observer et surveiller une prise actuelle ;
**caractérisée en ce que**
la subdivision des éléments capteurs (55, 61) dans la zone surfacique centrale (59) et dans la zone surfacique (63) en forme de cadre est déterminée durablement ou déterminable.

2. Caméra cinématographique selon la revendication 1,
**caractérisée en ce que**
la subdivision des éléments capteurs (55, 61) dans la zone surfacique centrale (59) et dans la zone surfacique (63) en forme de cadre est réglable, afin de pouvoir modifier la taille et/ou la forme des surfaces surfaciques (59, 63).

3. Caméra cinématographique selon la revendication 1 ou 2,
**caractérisée en ce que**
le système d'affichage (43) est intégré dans la caméra cinématographique, et/ou
le système d'affichage (43) est connecté à la caméra cinématographique par câble ou par radio.

4. Caméra cinématographique selon l'une des revendications 1 à 3,
**caractérisée en ce que**
le système d'affichage (43) destiné à afficher les signaux de réception de prise et les signaux de réception de surveillance est réalisé selon une disposition qui correspond à la subdivision des éléments capteurs (55, 61) dans la zone surfacique centrale (59) et la zone surfacique (63) en forme de cadre,
et/ou
le système d'affichage (43) est couplé à un générateur d'image permettant de générer un signal de cadre de séparation pour représenter un cadre de séparation entre les signaux de réception de prise et les signaux de réception de surveillance.

5. Caméra cinématographique selon l'une des revendications précédentes,
**caractérisée en ce que**
seuls les signaux de réception de prise sont prévus pour la transmission à un système de mémorisation (39),
et/ou
les éléments capteurs (55, 61) sont couplés au système de commande (45, 47) de telle sorte que les signaux de réception de prise et les signaux de réception de surveillance peuvent être lus séparément.

6. Caméra cinématographique selon l'une des revendications précédentes,
**caractérisée en ce que**
une interface (37) destinée à transmettre les signaux de réception de prise à un système de mémorisation (39) est associée à la zone surfacique centrale (59), et/ou
une interface (41, 42) destinée à transmettre les signaux de réception de prise au système d'affichage (43) est associée à la zone surfacique centrale (59), et/ou
une interface (41, 42) destinée à transmettre les signaux de réception de surveillance au système d'affichage (43) est associée à la zone surfacique (63) en forme de cadre.

7. Caméra cinématographique selon la revendication 6,
**caractérisée en ce que**
les signaux de réception de prise et/ou les signaux de réception de surveillance à transmettre au système d'affichage (43) sont susceptibles d'être réduits ou comprimés vis-à-vis de leur quantité de données au moyen de l'interface associée (41, 42),
et/ou
l'interface (42) prévue pour transmettre les signaux de réception de prise et les signaux de réception de surveillance au système d'affichage (43) comprend un circuit analogique de traitement d'images,
ladite interface (42) étant connectée de préférence du côté entrée à un système d'amplification (32) auquel est connectée au moins indirectement également l'interface (37) destinée à transmettre les signaux de réception de prise au système de mémorisation (39).

8. Caméra cinématographique selon l'une des revendications précédentes,
**caractérisée en ce que**
les éléments capteurs (55, 61) sont pilotables pour une lecture facultative, et/ou
l'association des éléments capteurs (55, 61) à la zone surfacique centrale (59) et à la zone surfacique (63) en forme de cadre peut être déterminée de façon variable.

9. Caméra cinématographique selon l'une des revendications précédentes,
**caractérisée en ce que**
dans la zone surfacique (63) en forme de cadre, le système capteur (31) présente
- une résolution de luminance,
- une résolution couleur, et/ou
- une résolution temporelle
qui sont plus faibles que celles dans la zone surfacique centrale (59), et/ou
l'extension de la zone surfacique centrale (59) du système capteur (31) correspond à une zone centrale d'une image optimisée d'une optique de prise (11) de la caméra cinématographique.

10. Caméra cinématographique selon l'une des revendications précédentes,
**caractérisée en ce que**
la zone surfacique centrale (59) du système capteur (31) présente un contour extérieur rectangulaire et la zone surfacique (63) en forme de cadre présente un contour intérieur rectangulaire complémentaire à celui-ci.

11. Caméra cinématographique selon l'une des revendications précédentes,
**caractérisée en ce que**
les éléments capteurs (55, 61) du système capteur (31) sont pourvus chacun d'un filtre couleur,
et/ou
les éléments capteurs (55, 61) du système capteur (31) sont réalisés à résolution couleur,
et/ou
le système capteur (31) comprend un capteur CMOS.

12. Caméra cinématographique selon l'une des revendications précédentes,
**caractérisée en ce que**
le système capteur (31) est pilotable au moyen du système de commande (45, 47) pour prendre les images cinématographiques à une fréquence de prise d'images prédéterminée variable.

13. Caméra cinématographique selon la revendication 12,
**caractérisée en ce que**
pour varier la fréquence de prise d'images, l'instant de commencement de l'exposition des éléments capteurs (55, 61) et/ou l'instant de terminaison de l'exposition des éléments capteurs peuvent être commandés au moyen du système de commande (45, 47),
et/ou
les éléments capteurs (55, 61) du système capteur (31) sont pilotables au moyen du système de commande (45, 47) pour une remise à zéro séquentielle et pour une lecture séquentielle successive,
et/ou
pour varier la fréquence de prise d'images, la cadence d'une remise à zéro ou d'une lecture séquentielle des signaux de réception des éléments capteurs (55, 61) peut être commandée,
et/ou
les éléments capteurs du système capteur (31) sont pilotables au moyen du système de commande (45, 47) pour une remise à zéro ou une lecture en parallèle ou en parallèle par groupe,
et/ou
la fréquence de prise d'image est variable en continu ou en incréments d'une cadence de lecture d'élément capteur.

14. Caméra cinématographique selon l'une des revendications précédentes,
**caractérisée en ce que**
à chaque élément capteur (55, 61) est associé un propre système d'amplification (32) qui est de préférence intégré dans le système capteur (31),
et/ou
à chaque élément capteur (55) de la zone surfacique centrale (59) est associé un propre système de numérisation (33) qui est de préférence intégré dans le système capteur (31),
et/ou
à chaque élément capteur (61) de la zone surfacique (63) en forme de cadre est associé un propre système de numérisation (33) qui est de préférence intégré dans le système capteur (31).

15. Caméra cinématographique selon l'une des revendications précédentes,
**caractérisée en ce que**
le temps d'exposition du système capteur (31) peut être commandé par voie électronique par le système de commande (45, 47),
et/ou
le temps d'exposition des éléments capteurs (55, 61) peut être commandé par le système de commande (45, 47) individuellement pour chaque élément capteur, conjointement pour une partie des éléments capteurs ou conjointement pour tous les éléments capteurs,
et/ou
les éléments capteurs (55, 61) sont pilotables pour la génération successive de plusieurs signaux de réception qui correspondent à différents temps d'exposition et qui sont associés à une seule image cinématographique.

16. Caméra cinématographique selon l'une des revendications précédentes,
**caractérisée en ce que**
il est prévu un moyen de refroidissement pour le refroidissement actif du système capteur (31), le moyen de refroidissement comprenant de préférence un élément Peltier ou un ventilateur,
et/ou
le système de numérisation (33) est connecté à au moins une interface de données (37) pour acheminer les signaux de réception de prise numérisés à un système de mémorisation numérique (39).

17. Caméra cinématographique selon l'une des revendications précédentes,
**caractérisée en ce que**
il est prévu au moins un système de mémorisation numérique (39) pour mémoriser les signaux de réception de prise numérisés,
le système de mémorisation est susceptible d'être couplé de préférence de façon interchangeable à la caméra cinématographique,
et/ou
le système de mémorisation (39) peut être commandé au moyen du système de commande (45, 47) de préférence pour mémoriser en supplément au moins un paramètre de prise,
et/ou
il est prévu de préférence une horloge pour indiquer une heure, et le système de commande (45, 47) permet de commander la mémorisation d'une heure actuelle conjointement avec des données de l'image cinématographique ou d'un paramètre de prise.

18. Caméra cinématographique selon la revendication 17,
**caractérisée en ce que**
le système de mémorisation (39) comprend un moyen d'identification permettant de transmettre un code d'identification au système de commande (45, 47),
et/ou
la caméra cinématographique et le système de mémorisation (39) sont réalisés pour une transmission sans fil de données à mémoriser, et de préférence la caméra cinématographique comprend un émetteur radio et le système de mémorisation (39) comprend un récepteur radio,
et/ou
pour prendre des données à mémoriser et pour acheminer les données au système de mémorisation (39), il est prévu un moyen de mémorisation intermédiaire.

19. Caméra cinématographique selon l'une des revendications 17 ou 18,
**caractérisée en ce que**
le système de mémorisation (39) comprend au moins une interface de sortie pour émettre des données mémorisées,
et/ou
le système de mémorisation (39) peut être commandé à un débit qui diffère du débit de la lecture de données à mémoriser,
et/ou
le système de mémorisation (39) comprend au moins une mémoire magnétique, une mémoire magnéto-optique, une mémoire à semi-conducteur et/ou une mémoire optique.

20. Caméra cinématographique selon l'une des revendications précédentes, **caractérisée**
**par** une structure modulaire, dans laquelle
- le système capteur (31), conjointement avec le système de commande (45, 47),
- une optique de prise (11), et/ou
- un système de mémorisation (39)
forment une propre unité modulaire respective.
